# EUROPEAN PATENT SPECIFICATION

(11) **EP 0 807 363 B1**
(45) Date of publication and mention of the grant of the patent: **31.03.2004**
(21) Application number: 96902041.1
(22) Date of filing: 30.01.1996
(51) Int. Cl.: H04Q 7/34, G06F 9/445

(54) **FLEXIBLE DOWNLOADING OF SOFTWARE**
FLEXIBLE FERNLADUNG VON SOFTWARE
TELECHARGEMENT FLEXIBLE DE LOGICIELS

(30) Priority: 30.01.1995 US 380794
(43) Date of publication of application: 19.11.1997
(73) Proprietor: TELEFONAKTIEBOLAGET LM ERICSSON, 126 25 Stockholm (SE)
(72) Inventor: DAHLIN, Mats, Hakan, S-183 41 Täby (SE); ERIKSSON, Mats, Erland, S-961 93 Boden (SE); LÖFGREN, Lennart, Nils, Adolf, S-590 50 Vikingstad (SE)
(74) Representative: Sjöberg, Mats Hakan
(86) International application number: PCT/SE1996/000104
(87) International publication number: WO 1996/024231

(56) References cited:
- WO-A-91/02313
- WO-A-92/22870
- WO-A-93/20524
- US-A- 4 730 187
- US-A- 5 008 814

## Description

### BACKGROUND

The present invention relates to a system and method for downloading software files from one node in a communications system to one or more other nodes, and more particularly, to a system and method for downloading software files from a base station controller into base transceiver stations in a cellular telecommunication system.

The principles of operation of a mobile communications system, such as a cellular telephone system, are well known. Essentially, the system is divided into a land-based system and a radio system. Mobile subscribers communicate with any one of a number of base transceiver stations (BTSs) by means of the radio interface. The BTSs are geographically distributed so that as a mobile subscriber roams, he or she will be within the service area of at least one of the BTSs in the system. If, when a call is in progress, the mobile subscriber moves out of range of its assigned BTS and into the range of a neighboring BTS, the cellular telephone system will reassign the mobile subscriber to the neighboring TS, in a process called "handoff." Management of call handoff, as well as all other aspects of call initiation and termination, are handled by various components of the land-based system. The land-based system is also responsible for the routing of calls between mobile subscribers, and for interfacing calls to the public switched telephone network (PSTN).

The many functions of the land-based system are not performed by a single hardware unit, but are instead distributed among a number of components, which are coupled together in a communications network. For instance, conventional data processing networks often use distributed networks or distributed databases. As an example, WO 93/20524 discloses a fault tolerant change distribution method using a distributed database system which has at least two separate intercommunicating databases. At least part of the stored data is identical in the different databases. The changeable data items of the databases are provided with state fields, whereby, after a data item has been added, deleted or modified, the state field of the respective data item is set in a state which indicates that the change should be transmitted to another database. When the change has been transmitted to the other database, an acknowledgement of receipt of the change is awaited from the other database, whereafter the state field of the data item is set in a state which indicates that the change has been transmitted.

A distributed database is also disclosed in WO 91/02313, where a data processing network has a first processor and a second processor (for example a host computer) and a communication system linking the first processor and the second processor, control logic associated with the first processor manages the flow of information between the first processor and the second processor on behalf of one or more application programs running on said first processor. The control logic responds to calls issued by, or on behalf of, an application invoked by a user at the first processor to determine if a file or, set of files, associated with the calling application is the most up-to-date version of the file, or set of files available. The most up-to-date versions are always stored at the second processor (i.e.: the host). A comparison is made between the files and their version levels currently available at the first processor (work station) and the up-to-date files held at the second processor (host). A list of actions to be taken is then compiled and files are downloaded to the first processor to replace out-of-date files, to add or create files in order to augment those already there, and to delete any obsolete files no longer required by the application.

In communications networks, components include the above-described BTSs, which provide the radio link between the land-based system and the mobile subscribers. The land-based system may also include a base station controller (BSC) for controlling the high-level operation of as many as one hundred or more BTSs. Switching, call handoff, and other functions are performed by a mobile switching center (MSC) that is coupled to the BSCs in the system.

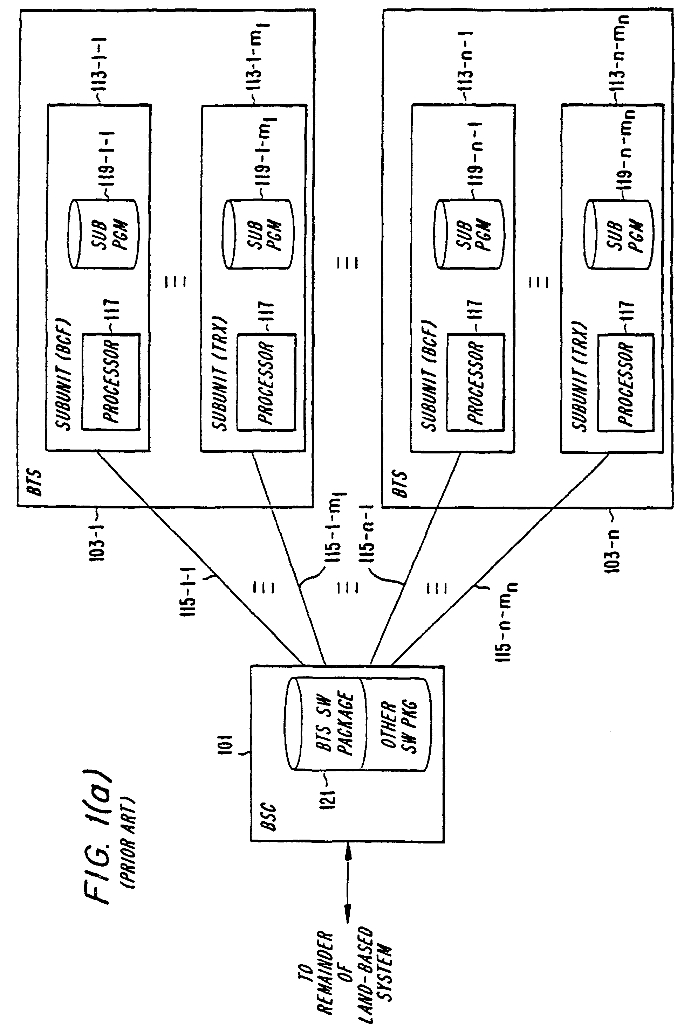

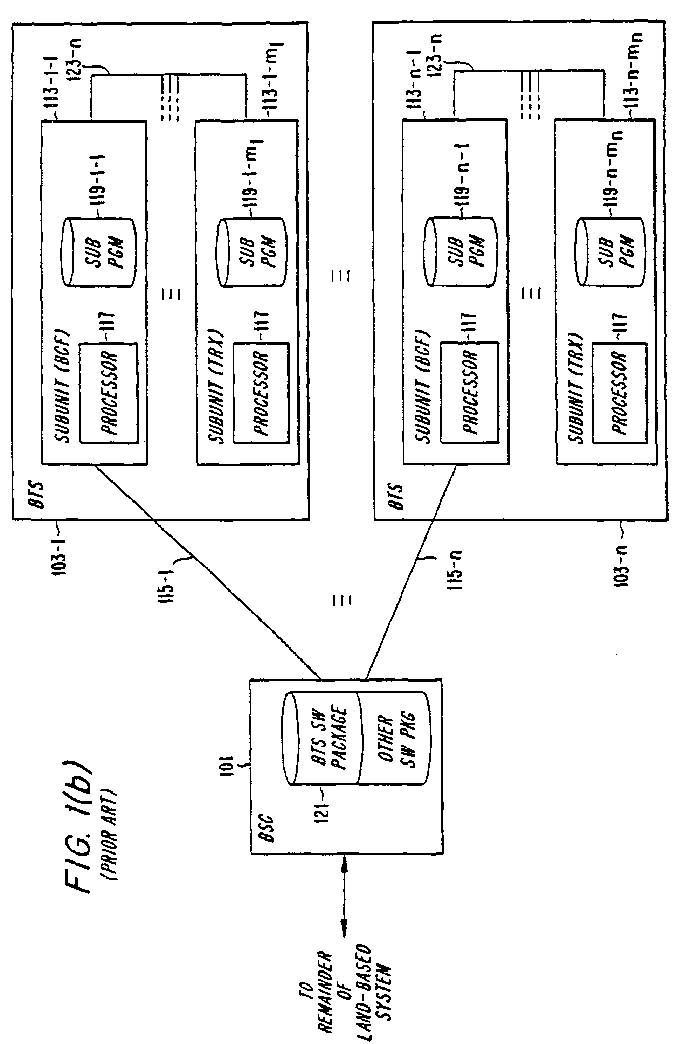

Referring now to FIG. 1(a), a network typically contains BTSs 103-1, ..., 103-n (henceforth referred to generally by the reference numeral 103). The BTSs 103 need not be identical to one another, and typically will be of various generations, types, and variants as a result of repeated upgrades and/or system expansions with newer and improved units of equipment. Expansions may involve the addition of whole new BTSs 103 or new parts, such as transceivers. Upgrades may mean replacement of parts, such as transceivers or timing units.

As illustrated in FIG. 1(a), a BTS 103 typically consists of several functional subunits 113-1-1, ..., 113-1-m₁, ..., 113-n-1, ..., 113-n-mₙ (henceforth referred to generally by reference numeral 113) such as one or more transceivers (TRXs) and a transceiver group manager for performing functions that are common to the BTS 103 as a whole, the so-called Base Station Central Functions ("BCF"). Normally, each of the subunits 113 is controlled by its own computer 117 having its own memory. The subunits 113 on a highest level, such as those mentioned, each have a signaling path 115-1-1, ..., 115-1-m₁, ..., 115-n-1, ..., 115-n-mₙ (henceforth referred to generally by reference numeral 115) by which they are directly controllable by a BSC 101. The signaling path 115 may consist of a dedicated pulse code modulation (PCM) time slot. Alternatively, the signalling path 115 may be implemented as an Open Systems Interconnect (OSI) layer 2 data link using a PCM time slot (for use as a physical layer). (OSI is a standard data communication protocol recommended by the International Organization for Standardization (ISO)). The OSI Layer 2 data link may be multiplexed or in any manner concentrated together with other OSI Layer 2 data links to other subunits on one and the same PCM time slot. Such a link or dedicated PCM time slot is considered to be a direct signaling path 115 between the BSC 101 and the subunit 113. Apart from using the signalling path 115 for subunit control, it is also used to carry signaling between the BSC 101 and the mobile stations (not shown), which are coupled to the BTS 103 via radio channels.

In a system as described above, the BTSs 103, and their constituent subunits 113, are typically controlled by software ("SW") 119 that is downloaded from the BSC 101. A software download might have to be performed, for example, upon startup of the system. Other events might also require a software download operation. For example, new BTSs 103 as well as new parts in a BTS 103 may require new application SW 119 that is different from that which was previously running in the BTS 103. This new SW 119 would have to be downloaded to the new or modified BTS 103 from the BSC 101. Furthermore, even when none of the hardware ("HW") in the system has changed, the entire network, or parts of it, is also occasionally updated with new (upgraded) application SW 119. In all of these different situations requiring a SW download (e.g., upon startup, HW unit replacement, and pure SW update), different versions of the SW 119 may have to be downloaded into different ones of the BTSs 103.

Upgrading the system typically involves replacing or modifying some of the subunits 113, while leaving others unchanged. As a result, the SW 119 that needs to be loaded into one BTS 103 may differ from the SW 119 associated with another BTS 103.

In conventional systems, the application software for a structure, such as a BTS 103, is a package 121 of several files (referred to herein as "subfiles"), one for each subunit. BTS download may be carried out over the signaling paths 115. In some realizations all paths are used, possibly with the same software being sent over all signalling paths 115. Alternatively, different software may be sent to different ones of the subunits 113.

In other network configurations, such as the one illustrated in FIG. 1(b), only one signalling path 115 to each BTS 103 is used. This signalling path may be the one terminating in the subunit 113-x-1 (1 ≤ x ≤ n) that performs the BCF function. Further transport of the SW 119 to the appropriate ones of the remaining subunits 113-x-y (y>1) within the BTS 103-x is then carried by an internal communication network 123-x. Such a communication network 123-x may have various limitations so that it is a matter of design choice how to distribute the software subfiles from the BSC 101. The optimal choice may depend on the type and variant of the BTS 103, and may even change when a new, upgraded SW release is introduced.

These prior art software download techniques suffer from a number of disadvantages. Considering, for the moment, the method illustrated in FIG. 1(b), in which the BSC 101 sends the SW package 121 to a BTS 103 via a single signalling path 115, the BSC 101 must keep track of which BTSs are to be loaded with which SW package 121. To handle updating, there must be one new version of the SW package 121 for each variant of BTS 103, even if only one subunit 113 accounts for the variation. Furthermore, the whole SW package 121 in proper variant is wholly transported on all possible signalling paths 115. As there are many subunits 113 and applications that can require updated SW more or less independently, the number of package versions may increase rapidly. Thus, this method leads to great and increasing waste of transport capacity with consequential long and increasing download times. This method also results in the waste of storage capacity, and it imposes a great and increasing burden in the manual handling of file carrying media.

Considering, now, the method illustrated in FIG. 1(a) in which each of the subunits 113 has a dedicated signalling path 115 for receiving its corresponding subfile, the BSC 101 has an even more cumbersome task of keeping track of which package 121 goes to which subunit 113. Each subunit 113 in the network would have to have its version level recorded in the BSC 101 which, taking account of its variant, would provide the intended upgrade. Dependencies between versions for different subunits 113 must also be kept track of, either manually or by a version handling subsystem in the BSC 101, or in another aspect of the prior art, in an operations support system (OSS). In view of the great volume of this kind of information, it follows that the manual data input that is, of necessity, required at some point creates a source of potential errors.

### SUMMARY

It is therefore an object of the present invention to provide an apparatus and method for distributing SW from a BSC to one or more BTSs that reduces the amount of BTS program code data that must be stored in the BSC.

It is another object of the present invention to provide a SW download technique that reduces the amount of BTS program code data to be transported to a BTS, by transporting to the BTS only such parts of it that are strictly needed. This includes, but is not restricted to, the situation where some of the SW is already stored in BTS memory.

It is still another object of the present invention to provide a SW download technique that is general and flexible in the presence of continual SW updating directed to a population of BTSs of several variants, and/or types, with or without a large commonality of needs for parts of the SW, where the updates may be affecting from very little up to all of the SW and where the updates must be adapted to BTS type and/or variant. It is further an object to provide such a technique in an environment where types/variants as well as SW file versions are proliferating.

It is yet another object of the present invention to provide a SW download technique that eliminates the risk of human errors in providing the information that controls which SW goes to which BTS and to which BTS subunit, and also controls which signaling path will be used for this download. It is a further object to eliminate the risk, in such a system, of downloading incompatible SW subfiles.

In accordance with one aspect of the invention, the foregoing and other objects are achieved in a networked system comprising a first node coupled to a second node, which may, for example, be a BSC coupled to a BTS in a cellular telecommunications system. The inventive method and apparatus supply one or more wanted software files to the second node in the following manner. In the first node, a menu is retrieved that comprises a list of software file identifiers, wherein each software file identifier identifies a corresponding one of a plurality of software files. Then, the list of software file identifiers is sent from the first node to the second node. In the second node, each of the software file identifiers is examined. A response is formed that comprises, for each of the software file identifiers, an indication of whether the corresponding one of the plurality of software files is alternatively wanted, or not wanted. In accordance with another aspect of the invention, the indication that a software file is not wanted may include alternative indications that the software file is already loaded, or that it is forbidden to be loaded. In the event that the first node receives an indication that the software file is already loaded, further processing may be performed to determine whether that software file should be downloaded to the second node, notwithstanding the indication that the software is already loaded (i.e., to determine whether downloading of that software file should be "forced" on the second node).

The response is then sent from the second node to the first node, where it is examined. The first node then retrieves those ones of the plurality of software files that correspond to the software file identifiers that were indicated as wanted by the second node. In accordance with one aspect of the invention, when the first node is a BSC in a cellular telecommunications network, the wanted software files are retrieved from a storage means located at the BSC. In an alternative embodiment, the BSC requests the wanted software files from an OSS, which stores them locally. After retrieving them from its local storage means, the OSS then sends the wanted software files to the BSC.

After retrieving the wanted software files, the first node sends them to the second node.

In another aspect of the invention, the step of sending the list of software file identifiers to the second node comprises, at the first node, sending the software file identifiers to the second node one at a time, and awaiting a response to each query before sending the next software file identifier.

In yet another aspect of the invention, the steps of offering a menu (i.e., the software file identifiers) to the second node, receiving a response at the first node, and transmitting the wanted files from the first node to the second node is repeated in each of two phases, so that in a first phase, the second node can request that a more complicated bootstrap program be downloaded and started. Then, during the second phase of downloading, the more complicated bootstrap program running in the second node makes the decisions about what further subfiles to accept from the first node.

### BRIEF DESCRIPTION OF THE DRAWINGS

The objects and advantages of the invention will be understood by reading the following detailed description in conjunction with the drawings in which:
FIGS. 1(a) and 1(b) are block diagrams of the pertinent components in cellular telecommunications systems for downloading software in accordance with prior art techniques;
FIG. 2 illustrates those components in a cellular communications system, including software packages, in accordance with the present invention;
FIG. 3 is a high level flow chart of the download operations that take place in a base station controller in accordance with the present invention;
FIGS. 4(a) and 4(b) depict a more detailed flow chart of first phase download operations that are performed in a base station controller in accordance with the present invention;
FIGS. 5(a) and 5(b) depict a more detailed flow chart of second phase download operations that are performed in a base station controller in accordance with the present invention;
FIG. 6 is a flow chart depicting the download operations that are performed in a base transceiver station by a subunit that is in the booting state, in accordance with the present invention;
FIG. 7 is a flow chart depicting the download operations that are performed in a base transceiver station by a subunit that is in the started state, in accordance with the present invention;
FIG. 8 is a state transition diagram for the "booting" and "started" states of a base transceiver station subunit, in accordance with the present invention; and
FIGS. 9(a) and 9(b) illustrate the components of a software package for use in accordance with the present invention.

### DETAILED DESCRIPTION

The various features of the invention will now be described with respect to the figures, in which like parts are identified with the same reference characters. Although the invention will be described with respect to its application in a cellular communications system, it is not restricted to such use. Rather, the described embodiment is shown for illustrative purposes only.

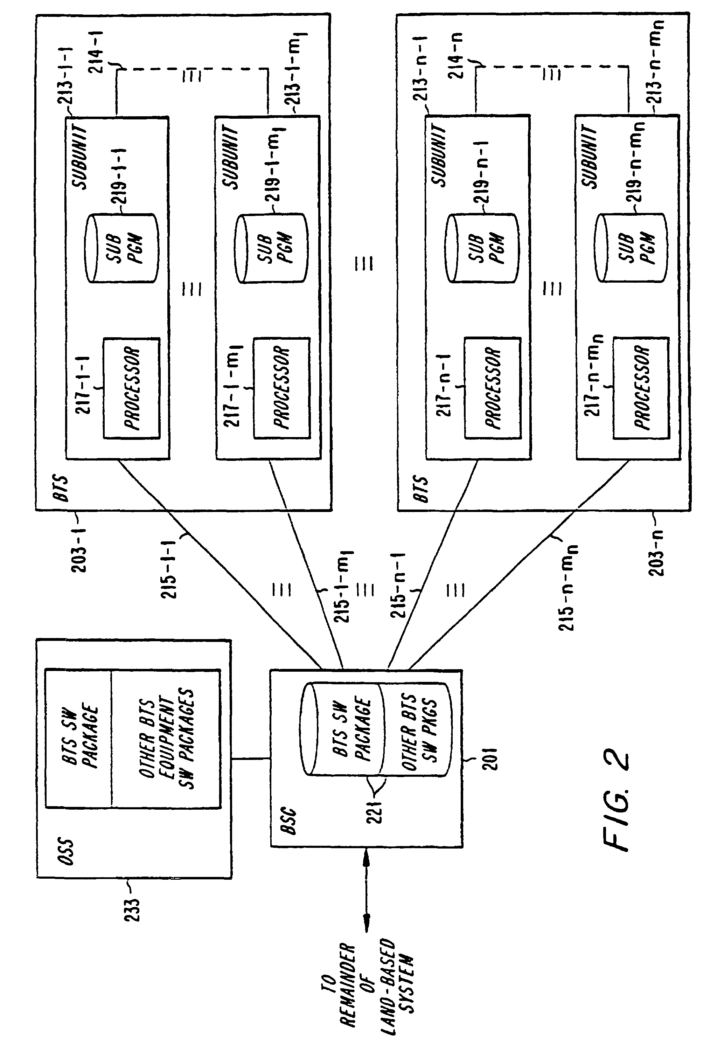

FIG. 2 illustrates those components in a cellular communications system that are pertinent to the present invention. As shown in the figure, a BSC 201 is connected to a number, n, of BTSs 203-1, ..., 203-n (henceforth referred to generally by reference numeral 203). Each one of the BTSs 203 includes a number of subunits: in BTS 203-1 are the subunits 213-1-1, 213-1-2, ..., 213-1-m₁; in BTS 203-n are the subunits 213-n-1, 213-n-2, ..., 213-n-mₙ. In general, the number of subunits 213-x in a given BTS 203-x is independent of the number of subunits in any other BTS, and is therefore expressed as the value mₓ. The subunits will be referred to generally by reference numeral 213, but this is not intended to imply that each of the subunits performs the same function. Each of the subunits 213 includes a processor 217-x-y (1 ≤ x ≤ n; 1 ≤ y ≤ mₙ) and a memory for storing a subprogram 219-x-y. As previously mentioned, the subunits 213-x within the same BTS 203-x have, in general, wholly different functions and construction from one another, and are therefore said to be of a different class from one another. The program code to be loaded into any given subunit 213 must be that which is intended for the subunit's class. For example, subunit 213-1-1 may be of class "Base station Central Functions" (BCF), while subunits 213-1-2, ..., 213-1-m₁ may be of class "transceiver" (TRX). Subunits 213 of the same class in different BTSs 203 are not necessarily identical in their construction, so that downloaded SW 219 must also correspond to subunit type and variant. Different SW versions for identically constructed subunits may exist, endowing the subunits with different functionality. Typically, higher SW version levels provide more functionality. A SW version level in one subunit 213 may or may not be compatible with SW versions in other subunits in the same BTS 203. This applies both to SW for the same class and to SW for different classes. There may further exist sub-versions of a version providing equivalent functionality for a class but with different properties, so that choice of sub-version is an option for an operator of a BSC 201 or OSS 233, or for an OSS optimization program. The subunits 213 of a BTS 203 may be interconnected by a bus or bus system 214 so that they may communicate with one another in some more or less limited way. In certain BTSs 203 this bus 214 may be used for the purpose of transferring downloaded SW from one subunit to another. However, this capability may not exist in other BTSs 203.

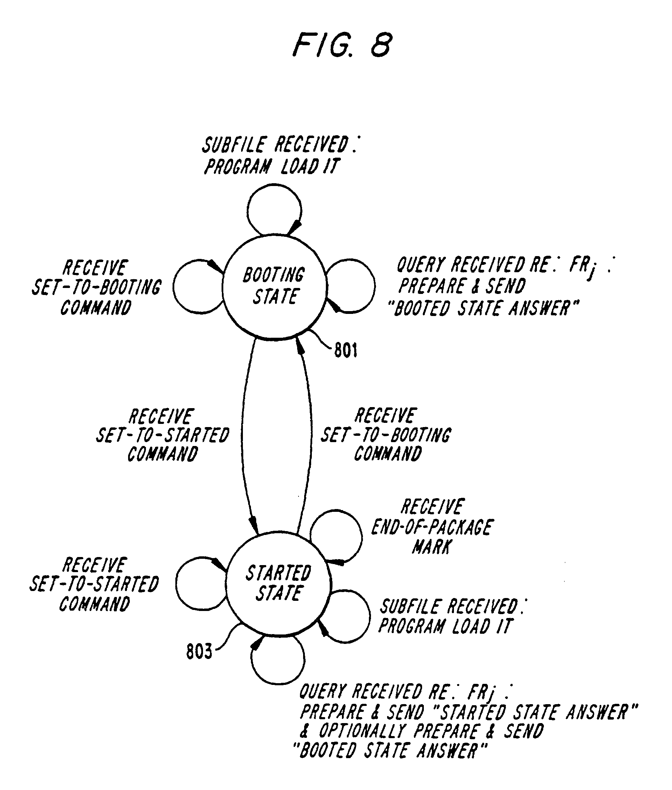

In accordance with one aspect of the invention, each of the subunits 213 operates in one of at least two states: booting state 801, and started state 803. FIG. 8 is a state transition diagram that shows how the various operations described below affect the state of the subunit 213.

In the exemplary embodiment, the BSC 201 is directly connected to each of the subunits 213-1-1, ..., 213-1-m₁, ..., 213-n-1, ..., 213-n-mₙ by means of corresponding signaling paths 215-1-1, ..., 215-1-m₁, ..., 215-n-1, ..., 215-n-mₙ. A signaling path 215 may be a Layer 1 (i.e., physical) connection, such as a PCM time slot with or without further multiplexing. Alternatively, a signaling path 215 may consist of an OSI Layer 2 data link on the physical connection. As is well known in the art, several Layer 2 data links may be carried on the same physical connection. The particular implementation of the signaling path 215 is not relevant to the invention, and is therefore neither described here in greater detail, nor shown in FIG. 2. The particular choice of a protocol for use in realizing layer 2 and the data link is also not relevant to the invention, which is applicable to any protocol or arrangement that allows logically independent signaling paths between the BSC 201 and each subunit 213 of each BTS 203. Examples of well-known data link layers are: LAPD in ETS 300 125 - "Integrated Services Digital Network (ISDN); User-Network Interface Data Link Layer Specification Application of CCITT Recommendations Q.920/I.440 and Q.921/I.441; LAPB in CCITT X.25, or the Layer 2 presented in Signaling System #7. Logically, by combining Layer 1 selection (switching) and Layer 2 addressing in the signalling paths 215, all subunits 213 are connected directly and equally to the BSC 201 in a star configuration. The present invention is not limited to this arrangement, however, but instead covers any schemes where the BSC 201 controls exactly which subunit 213 to communicate with (and, of course, which BTS 203 that subunit 213 sits in).

In accordance with the present invention, the BSC 201 should be prepared in advance with information identifying which SW package 221 should be downloaded into each BTS 203. Also, in advance, either the BSC 201 or the OSS 233 is supplied with, and stores, the BTS SW packages 221 for the BTSs 203, presumably one BTS SW package 221 for each totally different generation of BTS 203, and/or for each manufacturer's make of BTS 203.

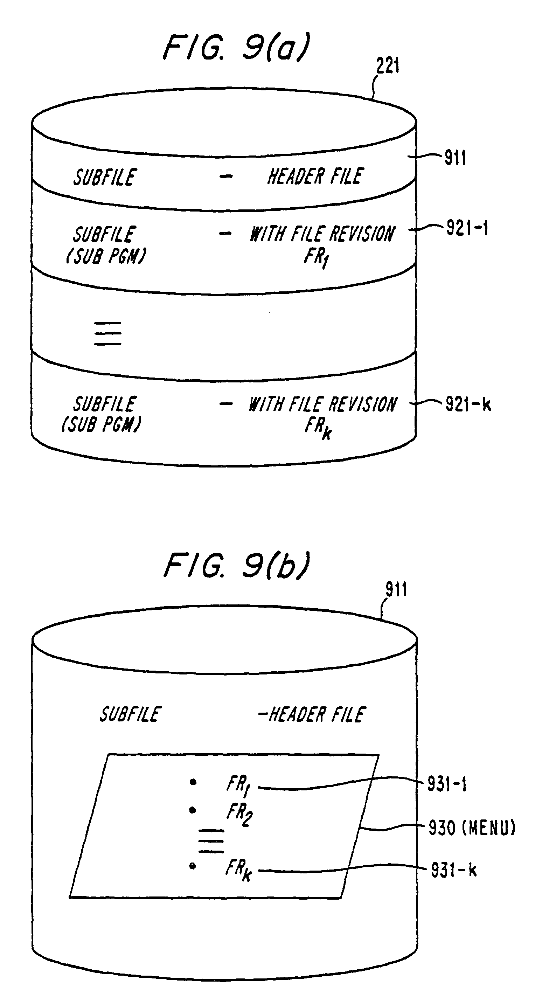

The BTS SW package 221 that is used in the exemplary embodiment is illustrated in greater detail in FIGS. 9(a) and 9(b). As can be seen in FIG. 9(a), the BTS SW package 221 consists of a number of subfiles including a header file 911 and one or more other subfiles 921-1, ..., 921-k, which are the subprograms to be downloaded to one or more of the subunits 213. Each of the subfiles 921-1, ..., 921-k is identified by a file revision number ("FR"). For example in FIG. 9(a), the first subfile containing a subprogram is identified as FR₁, and the last subfile is identified as FRₖ.

Like most software, the BTS subfiles are updated regularly, sometimes to account for changes to the hardware features, and sometimes to introduce purely software-dependent improvements. Such changes, which result in a new "version" of the software, may mean changes to one or more subfiles out of all of those subfiles that are intended to work together. Also, a change in the number of subfiles that are packaged together can also represent a new version level. In order to keep track of these various versions, the file revision number also includes a version number. In one possible usage of this number, it is updated not only in changed subfiles, but also in unchanged subfiles that are packaged together with the changed subfile. This allows all subfiles that correspond to a particular BTS type and variant to have the same version number.

Further in accordance with the present invention, the header file 911 contains a menu 930, that contains a list of all of the file revision identifiers 931-1, ..., 931-k in correspondence with the file revision numbers of the subfiles 921-1, ..., 921-k contained in the BTS SW package 221 (see FIG. 9(b)). Each of the file revision identifiers 931-1, ..., 931-k, globally and uniquely identifies a subfile 921, in such a way that the corresponding file can be located and read using the underlying file storage system in BSC 201, or in an alternative embodiment of the invention, the OSS 233.

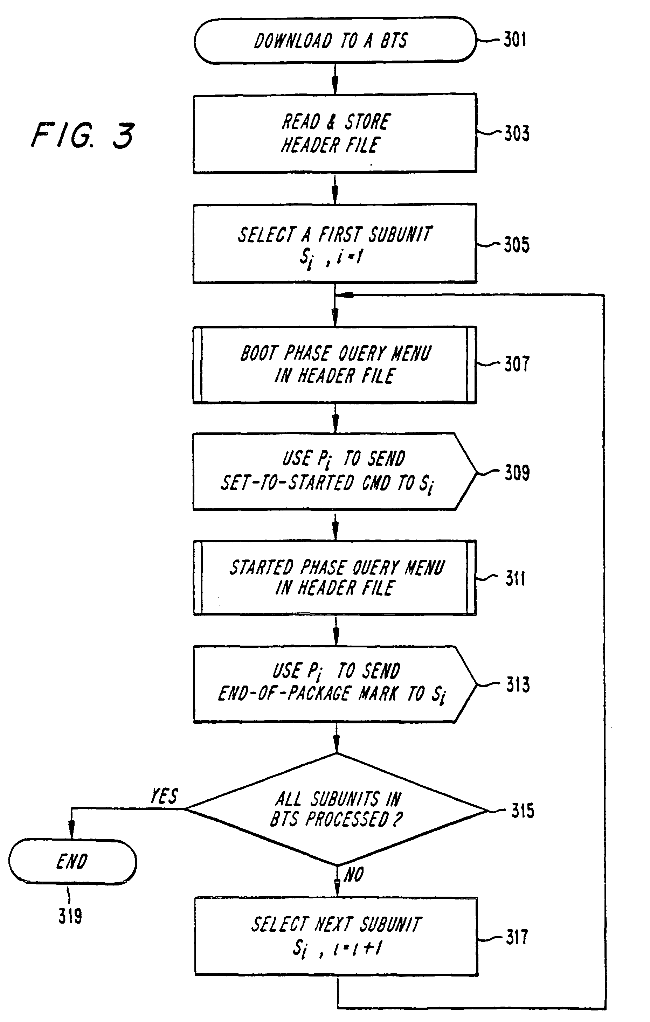

In accordance with one embodiment of the invention, download proceeds in the following manner, which is also depicted in the flow charts of FIGS. 3 through 7. In possible other embodiments, parts or all of the steps to be described here as being performed in the BSC 201 can alternatively be performed by the OSS 233, which would perform signaling to a BTS 203 through the BSC 201.

Referring now to FIG. 3, download is initiated (step 301) by one of a number of possible events. Such events include, but are not limited to:
· The issuance of a command from a BSC operator, requesting that a download operation be targeted at a single BTS 203-x;
   · The issuance of a command from a BSC operator, requesting that a download operation be targeted at a select group of BTSs 203;
   · The issuance of a command from a BSC operator, requesting that a download operation be targeted at all BTSs 203 connected to the BSC 201;
   · The issuance of a command from an OSS operator, requesting that a download operation be targeted at a single BTS 203-x;
   · The issuance of a command from an OSS operator, requesting that a download operation be targeted at a select group of BTSs 203;
   · The issuance of a command from an OSS operator, requesting that a download operation be targeted at all BTSs 203 connected to the BSC 201;
   · Receipt, by the BSC 201, of a report from a BTS 203 indicating that a previous fault has disappeared (download initiation may be performed automatically by the BSC 201 upon receipt of such report);
   · Detection, by the BSC 201, of signs of certain BTS malfunctions, such as the lack of a response to certain commands.

For each BTS 203-x (1 ≤ x ≤ n) that is to be the potential recipient of one or more subprograms 921-1, ..., 921-k, a corresponding header file 911 is located and read into the BSC computer memory (step 303). Next, the first subunit 213-x-i (i=1) that is associated with the BTS 203-x is selected for processing. It can be seen that the test at step 315 ("All subunits processed?") followed by the execution of step 317 ("select a next subunit 213-x-(i+1) for processing") creates an execution loop, so that steps 307 - 313 are executed once for each of the subunits 213-x-1,..., 213-x-mₓ in the BTS 203-x. During execution of steps 307 - 313 for a given subunit 213-x-i (1 ≤ i ≤ mₓ), messages are exchanged with the subunit 213-x-i using the corresponding signaling path 215-x-i. Although the exemplary embodiment shows each of the subunits 213 being handled one at a time in succession (by means of repeated execution of steps 307 - 317), this is not a requirement of the invention. Rather, it would be readily apparent to one having ordinary skill in the art that the methods described here could by adapted to deal with all of the subunits 213 concurrently.

In the exemplary embodiment, the processing that takes place in the BSC 201 at steps 307 - 313 is designed to perform a two-phase download operation. In a first phase of execution, each subunit 213-x-i is given an opportunity to use a resident bootstrap program (or, alternatively, an executing application program that emulates the bootstrap program) to select subfiles to be downloaded and started. In accordance with the invention, the subfiles transferred during this phase may, themselves, be bootstrap programs that are capable of performing a more complicated program load operation than that of the resident bootstrap program. Therefore, the first phase of execution is followed by a second phase, in which each subunit 213-x-i is again given an opportunity to select subfiles to be downloaded and started. However, during the second phase, it is the program that was downloaded and started during the first phase that makes the decisions. Of course, the design need not stop at only two phases, but can be extended to include as many download phases as the designer sees fit for a particular environment.

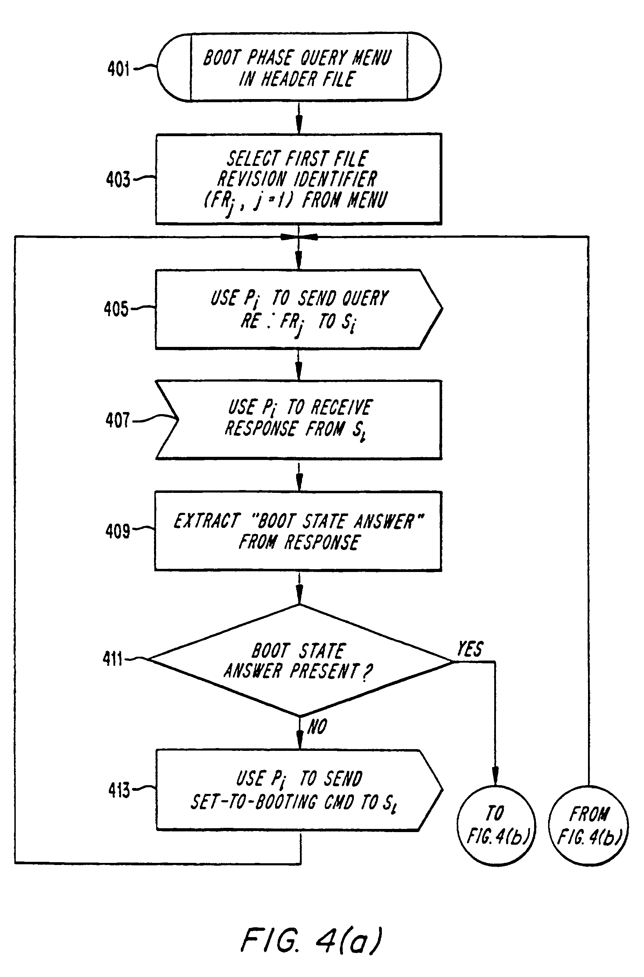

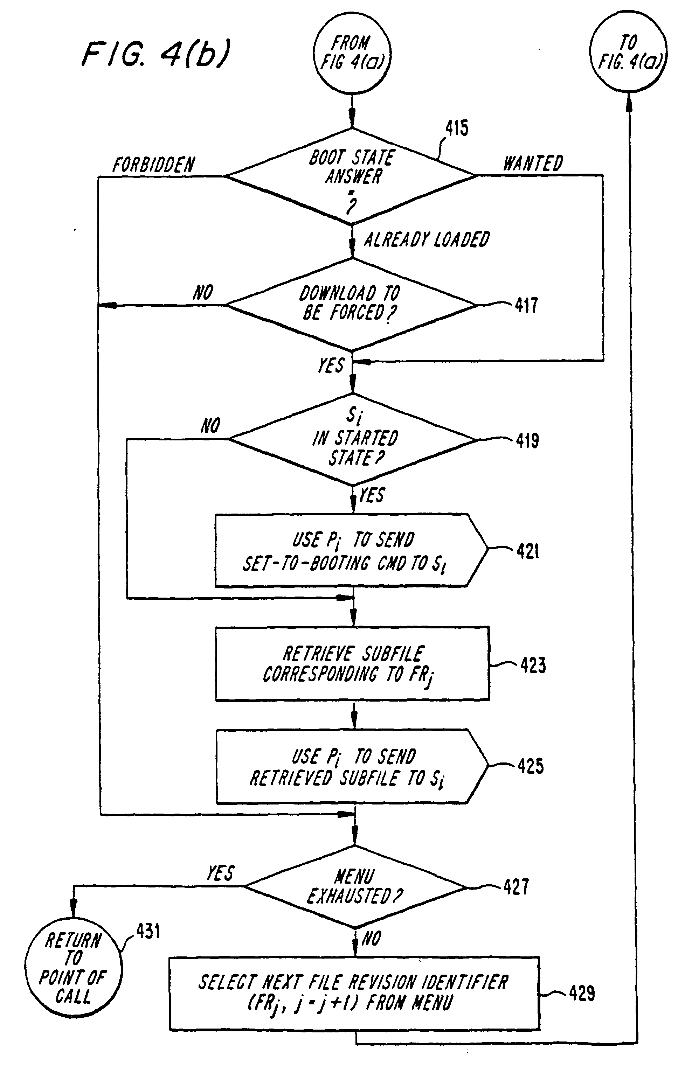

The two phases of the exemplary embodiment of the invention will now be described. At step 307, the BSC 201 calls a procedure entitled "Boot Phase Query Menu In Header File." This procedure (which is described in more detail below with reference to FIGS. 4(a) and 4(b)) goes through the header file 911, and determines, for each of the listed file revision identifiers 931-1, ..., 931-k, whether the corresponding one of the subfiles 921-1, ..., 921-k should be transmitted to the subunit 213-x-i. Execution at step 307 also ensures that the selected subfiles are downloaded to the subunit 213-x-i. In accordance with a preferred embodiment of the invention, subfile selection and subsequent downloading are accomplished by alternatingly querying the subunit 213-x-i about a subfile 921-j (1 ≤ j ≤ k), and then conditionally sending the subfile 921-j to the subunit 213-x-i in dependence on the received answer and possibly other information.

It should be noted that since the "Boot Phase Query Menu in Header File" procedure may be executed without there being any loading at all (i.e., the subunit 213-x-i may refuse all of the offered subfiles 921), the subunit 213-x-i does not necessarily have to be put into the booting state 801 before execution of block 307. It is advantageous to avoid having the subunit 213-x-i pass into and out of starting state unnecessarily because state transitions may trigger other, unrelated time-consuming processes, such as those which are associated with hardware test functions. Therefore, in the exemplary embodiment, such state transitions have been minimized. In the event that the subunit 213-x-i is in the started state 803 at the time that step 307 begins execution, then the "Boot Phase Query Menu in Header File" procedure will cause the subunit 213-x-i to enter the booting state 801 if a subfile 921-j is actually selected for downloading.

After the processing at step 307 has been completed, the BSC 201 uses the corresponding signalling path 215-x-i to send a "Set to Started State" command to the subunit 213-x-i. This causes the subunit 213-x-i to leave the booting state 801, if it was in it, and to enter the started state 803. Any subfiles 921-j that were downloaded as a result of execution of step 307 will now begin executing. In accordance with one aspect of the invention, these downloaded subfiles 921-j may themselves constitute a bootstrap program that will control which subfiles 921-j will be downloaded during the next phase of downloading (described below).

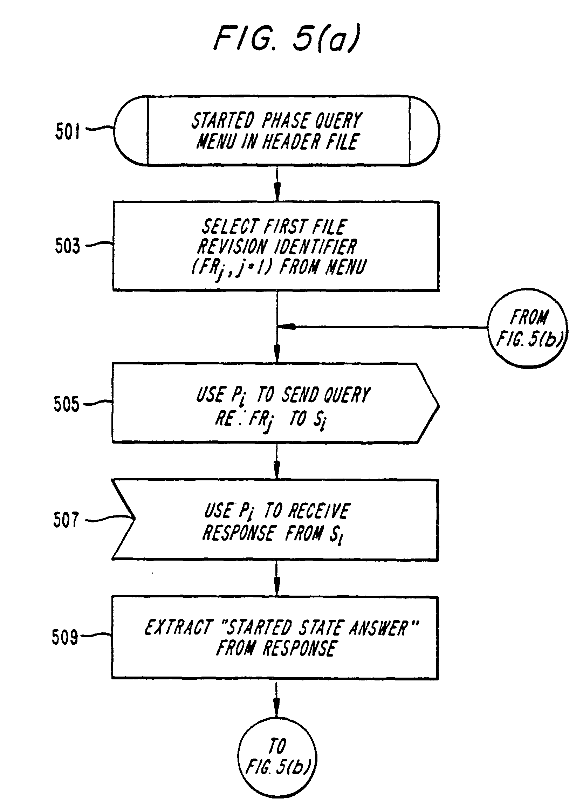

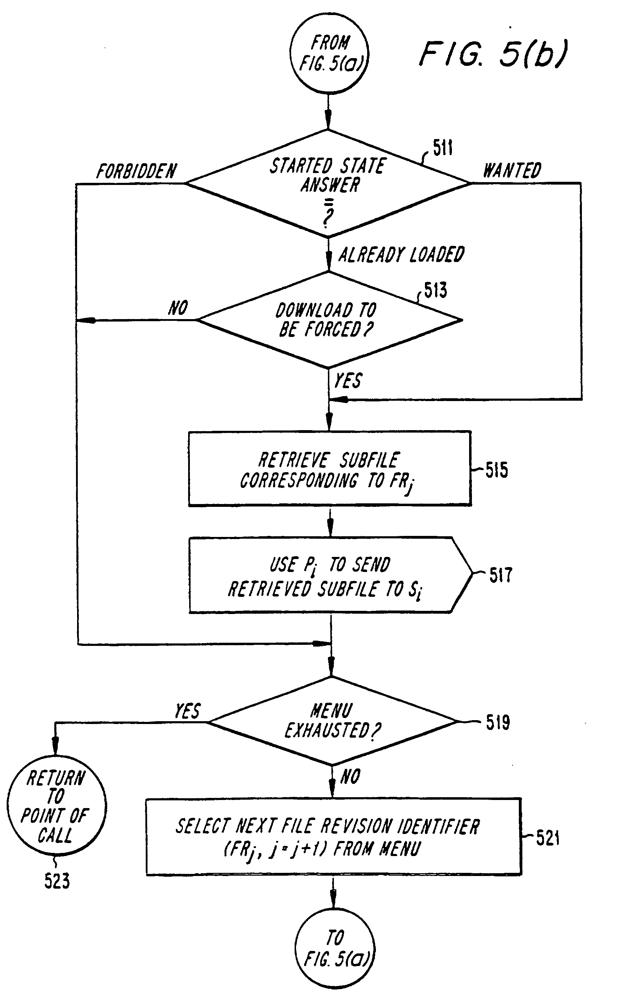

Next, at step 311, the BSC 201 enters the second phase of the download process by calling the "Started Phase Query Menu in Header File" procedure (described in greater detail below, with reference to FIGS. 5(a) and 5(b)). Like the procedure called at step 307, the "Started Phase Query Menu in header File" procedure goes through the header file 911, and determines, for each of the listed file revision identifiers 931-1, ..., 931-k, whether the corresponding one of the subfiles 921-1, ..., 921-k should be transmitted to the subunit 213-x-i. Execution at step 311 also ensures that the selected subfiles 921 are downloaded to the subunit 213-x-i.

Following completion of this subfile transfer procedure call, the BSC 201 sends an "end of package" mark to the subunit 213-x-i. As will be seen from the more detailed description below, receipt of the "end of package" mark by the subunit 213-x-i causes that subunit 213-x-i to first determine which, if any, of the downloaded files should be started, and then to start those files.

Next, as explained above, step 315 determines whether download processing has been performed for each of the subunits 213-x-1,..., 213-x-mₓ in the BTS 203-x. If so, then processing is completed at block 319. Otherwise, at step 317 a next subunit 213-x-(i+1) is selected for processing in a repetition of steps 307 - 313.

Thus, for each subunit 213-x-i, the BSC 201 performs a subfile query procedure twice: once at step 307, and then again at step 311. Different subfiles may be downloaded by the "Started Phase Query ..." procedure compared to those which may be downloaded by the "Boot Phase Query ..." procedure, however, because the recipient subunit 213-x-i is in a different state, and is therefore executing different programs, during each of the two calls. That is, during the execution of step 307, the subunit 213-x-i may be in the booting state 801, executing a resident boot program (or in the started state 803, executing an application program that emulates the resident boot program). By contrast, during the execution of step 311, the subunit 213-x-i is guaranteed to be in the started state 803, as a result of sending the "set-to-started" command to the subunit 213-x-i (step 309). In the started state 803, the subunit 213-x-i will use either a bootstrap program that was just downloaded or an application program that was loaded at an earlier time, for the purpose of making download decisions in the second phase of the download process.

FIGS. 4(a) and 4(b) depict, in greater detail, the operation of the BSC's "Boot Phase Query Menu in Header File" procedure that is called in step 307. This phase 1 subfile transfer procedure is started when called (step 401). At step 403, initialization for the procedure is performed by selecting a first file revision identifier 931-j (with j=1) from the menu 930. Then, at step 405, the BSC 201 uses signalling path 215-x-i to send a message to subunit 213-x-i, querying whether the subprogram identified by the file revision identifier 931-j is "wanted", "already loaded", or "forbidden" to be downloaded.

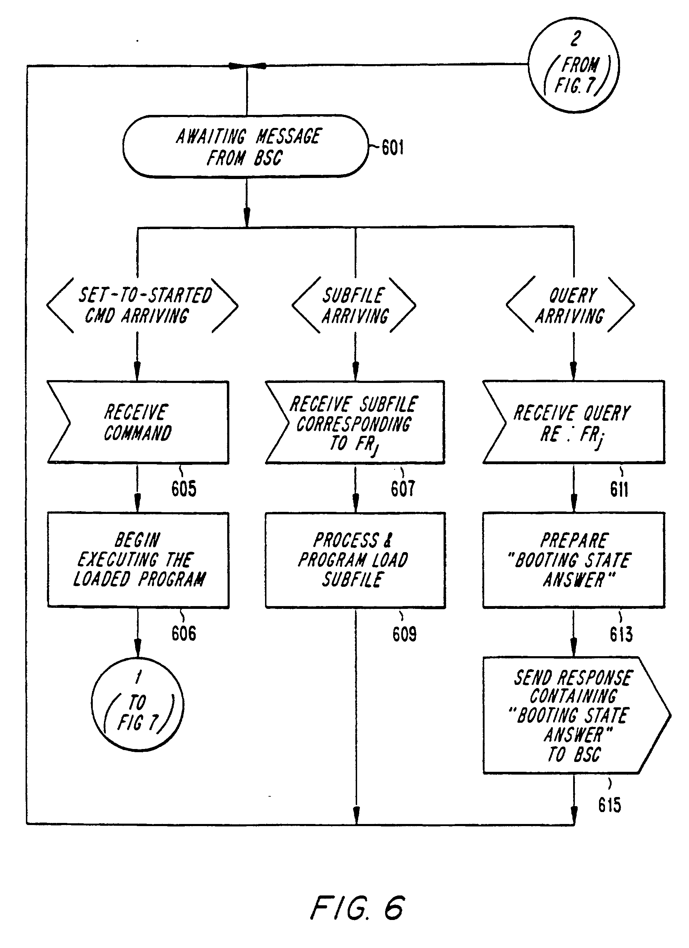

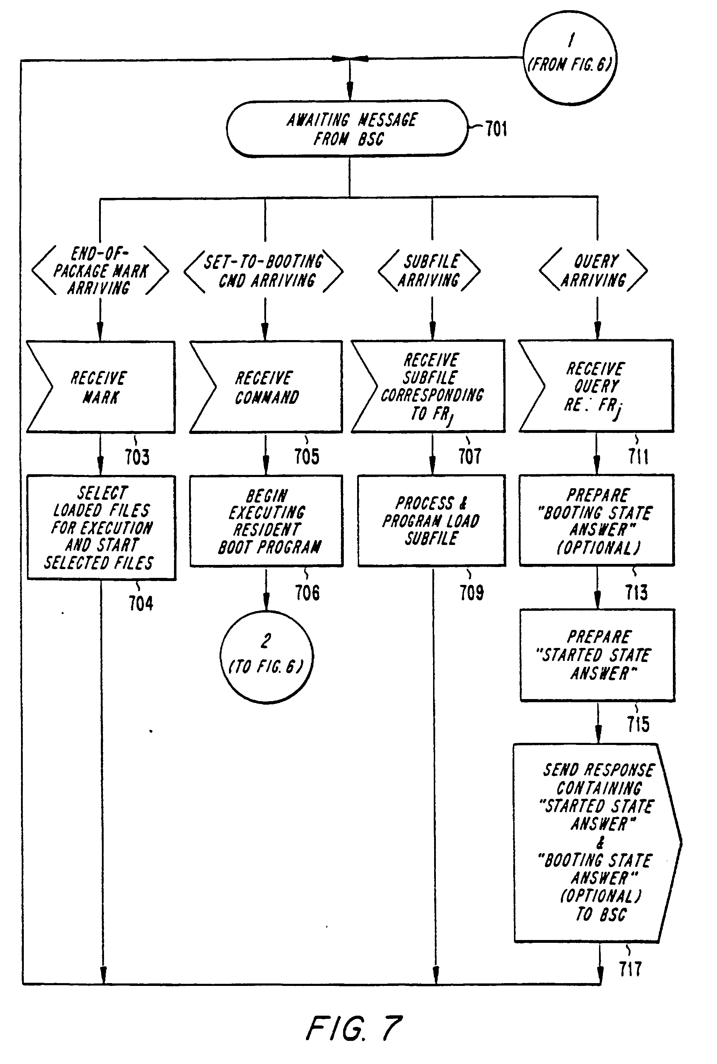

The subunit 213-x-i generates a response in accordance with the methods described below with reference to FIGS. 6 and 7, and then returns the response to the BSC 201. The response is received in the BSC 201 at step 407, and then at step 409, the "boot state answer" is extracted. Because the subunit 213-x-i may be in the started state 803, there is no requirement that it provide any "boot state answer" in its response, although this is a permissible action in started state 803. Thus, it is necessary, at step 411, to determine whether a "boot state answer" is, in fact, present in the received response.

If no "boot state answer" was present in the reply, then it is necessary to force the subunit 213-x-i to enter the booting state 801, so that the query can be repeated with respect to this particular subprogram. Accordingly, at step 413, the signalling path 215-x-i is used to send a "set-to-booting" command" to the subunit 213-x-i. Then, execution returns to step 405 so that the process can be repeated.

If a "boot state answer" was successfully extracted from the response, then execution proceeds to step 415, to determine the nature of the answer. If the subunit 213-x-i indicated that the subprogram identified by the file revision identifier 931-j is "forbidden" to be downloaded, then execution proceeds directly to step 427, where a test is performed to see whether each file revision identifier 931-j in the menu 930 has been processed. If so, then at step 431 the "Boot Phase Query Menu in Header File" procedure returns to the point of the procedure call (i.e., execution resumes at step 309). Otherwise, at step 429, the subprogram identified by the next file revision identifier 931-(j+1) is selected, and execution continues back at step 405.

If, at step 415, it is determined that the subunit 213-x-i indicated that the subprogram identified by the file revision identifier 931-j is either "wanted", or "already loaded" but is to be downloaded anyway (i.e., it takes the "to be forced" path out of step 417), then execution proceeds to step 419. Information from a BSC operator or from the OSS may be used to determine whether a download of the subprogram 921-j should be forced on the subunit 213-x-i. An example of a situation in which download forcing is appropriate is when a sub-version number for a software module that is to be tested will not be recognized as a significant higher version level than the module that it is to replace. In this case, the existing module would generate a response indicating that it was "already loaded." Other situations may similarly create the desire to force a download of the subprogram 921-j on the subunit 213-x-i. Because such situations are application-specific, it is beyond the scope of the present invention to enumerate them.

If the subprogram identified by the file revision identifier 931-j is "already loaded" and not to be forced, execution merely continues at 427 as described above.

At the point of executing step 419, it has been determined that a download operation is to take place. Because the subunit 213-x-i must be in the corresponding state (i.e., booting state 801) for receiving subfiles 921 during this phase of download, the BSC 201 tests (step 419) the state of the subunit 213-x-i (in the preferred embodiment, the BSC 201 always keeps track of the present state of each of the subunits 213), and if the subunit 213-x-i is found to be in started state 803, then the BSC 201 first uses the signalling path 215-x-i to send a "set-to-booting" command to the subunit 213-x-i. This step is skipped if the subunit 213-x-i is already in the booting state 801.

Next, at step 423, the BSC 201 retrieves the subfile 921-j that corresponds to the file revision identifier 931-j. This may be performed by reading these files from storage means located in the BSC 201. In accordance with another aspect of the invention, this may alternatively be performed by sending a request to an OSS 233 that has a storage means for storing these files. In the latter case, the OSS 233 then retrieves the requested subfile 921-j from its local storage means, and then sends it to the BSC 201.

Next, at step 425, the BSC 201 uses the signalling path 215-x-i to send the retrieved subfile 921-j to the subunit 213-x-i. Execution then proceeds to the test, at step 427, to determine whether each item in the menu has been processed. If so, then the procedure is finished. Otherwise, a next file revision identifier 931-(j+1) is selected, and the loop is repeated.

Turning now to FIGS. 5(a) and 5(b), these depict in greater detail the operation of the BSC's "Started Phase Query Menu in Header File" procedure that is called in step 311. This phase 2 subfile transfer procedure is similar to the "Boot Phase Query Menu in Header File," and begins when called (step 501). At step 503, initialization for the procedure is performed by selecting a first file revision identifier 931-j (with j=1) from the menu 930. Then, at step 505, the BSC 201 uses signalling path 215-x-i to send a message to subunit 213-x-i, querying whether the subprogram identified by the file revision identifier 931-j is "wanted", "already loaded", or "forbidden" to be downloaded.

The subunit 213-x-i generates a response in accordance with the methods described below with reference to FIG. 7 (as a result of execution of step 309, the subunit 213-x-i is guaranteed to be in the started state 803), and then returns the response to the BSC 201. The response is received in the BSC 201 at step 507, and then at step 509, the "started state answer" is extracted. Because the subunit 213-x-i is in the started state 803, the "started state answer" is guaranteed to be present.

Next, execution proceeds to step 511 to determine the nature of the answer. If the subunit 213-x-i indicated that the subprogram identified by the file revision identifier 931-j is "forbidden" to be downloaded, then execution proceeds directly to step 519, where a test is performed to see whether each file revision identifier 931-j in the menu 930 has been processed. If so, then at step 523 the "Started Phase Query Menu in Header File" procedure returns to the point of the procedure call (i.e., execution resumes at step 313). Otherwise, at step 521, the subprogram identified by the next file revision identifier 931-(j+1) is selected, and execution continues back at step 505.

If, at step 511, it is determined that the subunit 213-x-i indicated that the subprogram identified by the file revision identifier 931-j is either "wanted", or "already loaded" but is to be downloaded anyway (i.e., it takes the "to be forced" path out of step 513), then execution proceeds to step 515. Information from a BSC operator or from the OSS is used to determine whether a download of the subprogram 921-j should be forced on the subunit 213-x-i. As described above, an example of a situation in which download forcing is appropriate is when a sub-version number for a software module that is to be tested will not be recognized as a significant higher version level than the module that it is to replace.

If the subprogram identified by the file revision identifier 931-j is "already loaded" and not to be forced, execution merely continues at 519 as described above.

At the point of executing step 515, it has been determined that a download operation is to take place. The BSC 201 does not need to send any state-changing command, because it is already known that the subunit 213-x-i is in the started state 803. Therefore, at this point the BSC 201 retrieves the subfile 921-j that corresponds to the file revision identifier 931-j. As before, this may be performed by reading these files from storage means located in the BSC 201. In accordance with another aspect of the invention, this may alternatively be performed by sending a request to an OSS 233 that has a storage means for storing these files. In the latter case, the OSS 233 then retrieves the requested subfile 921-j from its local storage means, and then sends it to the BSC 201.

Next, at step 517, the BSC 201 uses the signalling path 215-x-i to send the retrieved subfile 921-j to the subunit 213-x-i. Execution then proceeds to the test, at step 519, to determine whether each item in the menu has been processed. If so, then the procedure is finished. Otherwise, a next file revision identifier 931-(j+1) is selected, and the loop is repeated.

In order to function with BSC 201 that is performing the above-described download procedure, a BTS subunit 213 executes a program that will now be described with reference to FIGS. 6-8. As previously mentioned, a subunit 213 can be in one of two states relevant to the download procedure: the booting state 801 and the started state 803 (see FIG. 8). In booting state 801, the subunit 213 is running a resident bootstrap loader program (e.g., one stored in a nonvolatile memory or an executing application program that emulates the bootstrap program). In started state 803, the subunit 213 is running an application program that has been loaded into its memory. As mentioned above, this application program may be a more elaborate bootstrap program, for determining which files will be downloaded during the second phase of the download procedure. Fig. 8 is a state transition diagram that illustrates how reception of particular messages affects the state of the subunit 213.

Fig. 6 depicts the flow of a subunit 213 that is presently in booting state 801. At step 601, the subunit 213 is waiting to receive a message from the BSC 201. As the BSC 201 begins executing the above-described Boot Phase Query Menu in Header File procedure (FIGS. 4(a) and 4(b)), the subunit 213 receives a query message inquiring whether the subprogram identified by the file revision identifier 931-j is "wanted", "already loaded", or "forbidden" to be downloaded. This results in execution of step 611, where the query is received by the subunit 213.

Next, at step 613, the subunit 213 prepares the "booting state answer." This may be performed, for example, by utilizing any of a number of well-known methods (such as calculating a cyclic redundancy character (CRC) checksum) to determine whether a valid program file is already loaded in memory. If it is, then the file revision identifier 931-j that was received in the query is compared to that of the loaded file, except for the sub-version part of it. If the two match, then the answer "already loaded" is sent in a responding message (step 615). If no valid program file is presently loaded in the subunit's memory, or if there is a mismatch, then the file revision identifier 931-j is analyzed to see if it is a SW file for the BTS type, subunit variant and subunit class that are valid for this particular subunit 213 in the booting state 801. If so, the answer "wanted" is sent in the response (step 615).

If neither of the above answers are generated, then the answer "forbidden" is sent in the response (step 615). The subunit 213 then goes back to step 601, where it again waits for further messages to arrive.

The next message may be a new query, and the described flow is repeated. If the next message is a subfile 921-j, it is received at step 607. Then, at step 609, the received subfile 921-j is processed in accordance with any of a number of well-known techniques, such as decompressing, performing CRC summation, decryption, or length check. Finally, the processed file is stored into the subunit's memory, from which it may be executed.

Again considering the situation where the subunit 213 is awaiting a message from the BSC 201 (step 601), the next arriving message may be a command to go into started state 803, in which case it receives the command (step 605), and then starts executing the program file that was either stored or found in memory in booting state 801 (step 606). Upon beginning execution of the program, the state of the subunit 213 changes to started state 803, as shown by the transition to entry point 1 in FIG. 7.

Referring now to FIG. 7, this is a flowchart depicting the operation of the subunit 213 once it is in the started state 803. At step 701, it is waiting to receive a message from the BSC 201. (Of course, the subunit 213 is also performing other tasks, as directed by the executing program. The flow chart depicts only those operations that are pertinent to the download process.) The program that is running is now the one that was loaded in booting state 801 (or the one that was found to be already resident during the first phase of the download process). This means that analysis of query messages now resides in a loadable program. The analysis can therefore be built in complex ways and be modified by mere SW changes. In short, it displays all of the flexibility of a dynamically loadable control program.

In other respects, the flow of FIG. 7 is analogous to that of FIG. 6. The first message to arrive after the command to set-to-started state (step 309) is thus a query, received in step 711. At step 713, the subunit 213 optionally prepares a "booting state answer" in the manner described above with respect to step 613. This is done so that the program being executed in started state 803 has the option of providing responses for use during the first phase of the download process.

Next, at step 715, the subunit 213 prepares a "started state answer." This action is not optional. The preparation of the "started state answer" is wholly dependent on the program that was downloaded (or found to be already loaded) in the boot phase. This step can perform any function to arrive at a decision on whether to accept the offered subfile 921-j ("started state answer" = "wanted"), or whether to indicate that the offered subfile 921-j is "already loaded" (may be downloaded again), or "forbidden" to be downloaded. For example, the subunit 213 may derive a "started state answer" as a function of the subfile's validity, taking into account the BTS type, subunit variant, subunit class. The subunit 213 may further consider the version number of the offered subfile 921-j: whether this is equal, lower than, or higher than that of the currently loaded version (if any). Other possible information that may be used is whether the offered version is compatible with the versions of other subfiles - even subfiles located in other subunits of the BTS 203-x (an internal network 214-x may be utilized to determine this information).

After preparing the "started state answer," execution proceeds to step 717, where the "started state answer" as well as the optional "booting state answer" are encoded in a response that is sent to the BSC 201. In accordance with a preferred embodiment of the invention, the response is encoded to have a slot dedicated to holding an answer for the "current" state, and a second slot dedicated to holding an answer for the "other" state. Thus, since the subunit 213 is presently in the started state 803, the "started state answer" would be encoded into the response slot allocated to the "current" state, and any "booting state answer" would be placed into the response slot allocated to the "other" state.

The subunit 213 then returns to waiting for messages (step 701), and behaves as described above with respect to booting state 801 (see FIG. 6). That is, when a subfile 921-j arrives, the subunit 213 processes and stores it (steps 707 and 709) as described above with respect to steps 607 and 609.

If a new query message arrives, it is processed by steps 711-717 as described above.

If an "end of package" mark arrives (sent by the BSC 201 at step 313), it is received, and the subunit 213 uses an application-specific routine to determine which, if any, of the programs now loaded in memory should be started (steps 703-704). The state of the subunit 213 remains unchanged, however, and whichever routine is running at the conclusion of step 706 ensures that step 701 is executed in order to resume waiting for a next message. That is, any new program that takes over control from the currently executing program must also be able to execute the steps illustrated in FIG. 7.

If a "set-to-booting" command arrives, then the subunit 213 receives the command (step 705), and then starts executing the resident bootstrap program (step 706). Alternatively, the subunit 213 may begin executing an application program that emulates the resident bootstrap program. In either case, the state of the subunit 213 changes to booting state 801, as shown by the transition to entry point 2 in FIG. 6.

In another aspect of the invention, only one of the subunits 213-x-1 in the BTS 203-x will allow any subfile 921-j at all to be loaded. The remaining subunits 213-x-y (2 ≤ y ≤ mₓ) always answer "forbidden" in response to each query, regardless of whether they are in the booting state 801 or the started state 803. The first subunit 213-x-1, in this instance, would be responsible for receiving all subfiles 921 for the BTS 203-x, and distributing them to the other subunits 213-x-y by means of internal network 214-x.

In accordance with yet another aspect of the invention, the number of phases of the download process can be varied. That is, it can be reduced to just one query process (one query per subfile 921), or it can be increased to three or even more phases. Note that the invention encompasses the possibility of effectively reducing the number of phases down to just one by performing all file transfers during only one of the phases, and then having the subunits 213 refuse all offered subfiles 921-j during all other download phases.

Furthermore, the number of phases can be dynamically changed, and based on response information received from the BTS subunits 213. It can also be based on information that is possibly added, per file revision identifier 931-j, in the header file.

In yet another embodiment of the invention, the subunits 213-x-i do not have to be processed sequentially. Rather, the BSC 201 can send queries to several or all of the subunits 213 in parallel.

In still another embodiment of the invention, the BSC 201 need not await a response from the subunit 213-x with respect to a first subfile 921-j before sending a query with respect to the next subfile 921-(j+1). Instead, the BSC 201 can send the entire list of file revision identifiers 931 to the subunit 213-x-i all at once. This has the advantage of allowing the subunit 213-x-i to peruse the entire list before committing itself to receiving any particular subfiles 921. Those having ordinary skill in the art will readily be able to modify the exemplary embodiment of FIGS. 3-7 to effect this alternative embodiment of the invention. For example, one might design a routine that causes the BSC 201 to send each of the file revision identifiers 931 to the subunit 213-x-i, followed by an "end-of-package" mark, to let the subunit 213-x-i know that it has received all of the file revision identifiers 931. Upon receipt of the "end-of-package" mark, the subunit 213-x-i would then peruse the list, make its selections, and encode these in a response. The BSC 201, upon receiving the response, could then retrieve and send the requested subfiles 921 as described above.

As described above, the invention has a number of advantages over prior art methods of downloading software. For example, it takes into account both the fact that a software package may consist of several subfiles and also the possibility that downloading may take place over several transport paths, each terminating in a different subunit 213-x-i of the BTS 203-x.

Furthermore, the present invention does not require a one-to-one correspondence between subunits and subfiles. Because the inventive technique allows a subunit to either reject or accept an offered subfile, subfiles may be grouped into packages that are independent of the requirements of any one subunit.

The invention has been described with reference to a particular embodiment. The preferred embodiment is merely illustrative and should not be considered restrictive in any way. The scope of the invention is given by the appended claims, rather than the preceding description, and all variations and equivalents which fall within the range of the claims are intended to be embraced therein.

## Claims

1. A method in a networked system comprising a first node (BSC) coupled to a second node (BTS) to supply one or more wanted software files (921-1,...921-k) to the second node (BTS), wherein software file identifiers (931-1,...931-k) each identifies a corresponding one of a plurality of software files (921-1,...921-k),
**characterized in** the steps of:
in the first node (BSC), retrieving a menu (930) that comprises a list of said software file identifiers (931-1,...931-k), and sending the list of software file identifiers (931-1,...931-k) from the first node (BSC) to the second node (BTS) (BTS);
in the second node (BTS), examining each of the software file identifiers (931-1,...931-k), and forming a response that comprises, for each of the software file identifiers (931-1,...931-k), an indication of whether the corresponding one of the plurality of software files (921-1,...921-k) is alternatively wanted, or not wanted;
sending the response from the second node (BTS) to the first node (BSC);
in the first node (BSC), examining the response and retrieving those ones of the plurality of software files (921-1,...921-k) that correspond to the software file identifiers (931-1,...931-k) that were indicated as wanted by the second node (BTS); and
sending the retrieved software files (921-1,...921-k) from the first node (BSC) to the second node (BTS).

2. The method of claim 1, wherein the indication that the corresponding one of the plurality of software files (921-1,...921-k) is not wanted is alternatively an indication that the corresponding one of the plurality of software files (921-1,...921-k) is already loaded in the second node (BTS), or an indication that the corresponding one of the plurality of software files (921-1,...921-k) is forbidden to be loaded in the second node (BTS).

3. The method of claim 1, wherein:
the networked system is a cellular telephone system, the first node (BSC) is a base station controller (201), and the second node (BTS) is a base transceiver station (203);
the base station controller includes storage means (221) for storing the plurality of software files (921-1,...921-k); and the step of, in the first node (BSC), retrieving those ones of the plurality of software files (921-1,...921-k) that correspond to the software file identifiers (931-1,...931-k) that were indicated as wanted by the second node (BTS) comprises the step of retrieving, from the local storage means, those ones of the plurality of software files (921-1,...921-k) that correspond to the software file identifiers (931-1,...931-k) that were indicated as wanted by the second node (BTS).

4. The method of claim 1, wherein:
the networked system is a cellular telephone system, the first node (BSC) is a base station controller (201), and the second node (BTS) is a base transceiver station (203); and
the step of, in the first node (BSC), retrieving those ones of the plurality of software files (921-1,...921-k) that correspond to the software file identifiers (931-1,...931-k) that were indicated as wanted by the second node (BTS) comprises the steps of:
sending, from the first node (BSC) to an operations support system, a request for those ones of the plurality of software files (921-1,...921-k) that correspond to the software file identifiers that were indicated as wanted by the second node (BTS);
in the operations support system, retrieving the requested software files (921-1,...921-k); and
sending the retrieved software files (921-1,...921-k) from the operations support system to the first node (BSC).

5. The method of claim 1, wherein the step of sending the list of software file identifiers (931-1,...931-k) to the second node (BTS) comprises the steps of:
a) selecting, from the list of software file identifiers (931-1,...931-k), a first software file identifier (931-k) for use as a current software file identifier;
b) sending the current software file identifier (931-k) from the first node (BSC) to the second node (BTS) (BTS);
c) waiting for the response from the second node (BTS);
d) after receiving the response from the second node (BTS), selecting, from the list of software file identifiers, a next software file identifier for use as the current software file identifier; and
e) repeating steps b) through d) until each of the software file identifiers (931-1,...931-k) in the list of software file identifiers has been sent from the first node (BSC) to the second node (BTS).

6. The method of claim 5, wherein step d) comprises the steps of:
after receiving the response from the second node (BTS), waiting for the response to be examined in the first node (BSC);
waiting for those ones of the plurality of software files (921-1,...921-k) that correspond to the software file identifiers (931-1,...931-k) that were indicated as wanted by the second node (BTS) to be retrieved in the first node (BSC);
waiting for the retrieved software files (921-1,...921-k) to be sent from the first node (BSC) to the second node (BTS); and then
selecting, from the list of software file identifiers (931-1,...931-k), a next software file identifier (931-k-1) for use as the current software file identifier.

7. A method as claimed in claim 1 further **characterized by**:
in the second node (BTS), beginning execution of the software files (921-1,...921-k) received from the first node (BSC);
sending, for a second time, the list of software file identifiers (931-1,...931-k) from the first node (BSC) to the second node (BTS);
in the second node (BTS), using the executing software files (921-1,...921-k) that were received from the first node (BSC) to examine each of the software file identifiers (931-1,...931-k), and forming a second response that comprises, for each of the software file identifiers, a second indication of whether the corresponding one of the plurality of software files (921-1,...921-k) is alternatively wanted or not wanted;
sending the second response from the second node (BTS) to the first node (BSC);
in the first node (BSC), examining the second response and retrieving those ones of the plurality of software files (921-1,...921-k) that correspond to the software file identifiers (931-1,...931-k) that were indicated in the second response as being wanted by the second node (BTS); and sending, from the first node (BSC) to the second node (BTS), the software files (921-1,...921-k) that were retrieved as a result of examining, in the first node (BSC), the second response.

8. The method of claim 7, wherein each of the first and second indications that the corresponding one of the plurality of software files (921-1,...921-k) is not wanted is alternatively an indication that the corresponding one of the plurality of software files (921-1,...921-k) is already loaded in the second node (BTS), or an indication that the corresponding one of the plurality of software files (921-1,...921-k) is forbidden to be loaded in the second node (BTS).

9. An apparatus in a networked system including a first node (BSC) coupled to a second node (BTS), for supplying one or more wanted software files (921-1,...921-k) to the second node (BTS), wherein software file identifiers (931-1,...931-k) each identifies a corresponding one of a plurality of software files (921-1,...921-k),
**characterized by**:
in the first node (BSC) :
means for retrieving a menu that comprises a list of said software file identifiers (931-1,...931-k), and
means for sending the list of software file identifiers (931-1,...931-k) from the first node (BSC) to the second node (BTS);
in the second node (BTS):
means for examining each of the software file identifiers (931-1,...931-k), and forming a response that comprises, for each of the software file identifiers, an indication of whether the corresponding one of the plurality of software files (921-1,...921-k) is alternatively wanted, or not wanted; and
means for sending the response from the second node (BTS) to the first node (BSC),
wherein the first node (BSC) further comprises:
means for examining the response and retrieving those ones of the plurality of software files (921-1,...921-k) that correspond to the software file identifiers (931-1,...931-k) that were indicated as wanted by the second node (BTS); and
means for sending the retrieved software files (921-1,...921-k) from the first node (BSC) to the second node (BTS).

10. The apparatus of claim 9, wherein the indication that the corresponding one of the plurality of software files (921-1,...921-k) is not wanted is alternatively an indication that the corresponding one of the plurality of software files (921-1,...921-k) is already loaded in the second node (BTS), or an indication that the corresponding one of the plurality of software files (921-1,...921-k) is forbidden to be loaded in the second node (BTS).

11. The apparatus of claim 9, wherein:
the networked system is a cellular telephone system, the first node (BSC) is a base station controller (201), and the second node (BTS) is a base transceiver station (203);
the base station controller (201) includes storage means for storing the plurality of software files (921-1,...921-k); and
the means, in the first node (BSC), for retrieving those ones of the plurality of software files (921-1,...921-k) that correspond to the software file identifiers (931-1,...931-k) that were indicated as wanted by the second node (BTS) comprises means for retrieving, from the local storage means, those ones of the plurality of software files (921-1,...921-k) that correspond to the software file identifiers (931-1, ...931-k) that were indicated as wanted by the second node (BTS).

12. The apparatus of claim 9, wherein:
the networked system is a cellular telephone system that further includes an operations support system (233) coupled to the first node (BSC);
the first node (BSC) is a base station controller (201);
the second node (BTS) is a base transceiver station (203);
the means, in the first node (BSC), for retrieving those ones of the plurality of software files (921-1,...921-k) that correspond to the software file identifiers (931-1,...931-k) that were indicated as wanted by the second node (BTS) comprises means for sending, from the first node (BSC) to the operations support system (OSS), a request for those ones of the plurality of software files (921-1,...921-k) that correspond to the software file identifiers (931-1,...931-k) that were indicated as wanted by the second node (BTS); and the operations support system (OSS) comprises:
means for retrieving the requested software files (921-1,...921-k); and
means for sending the retrieved software files (921-1,...921-k) from the operations support system to the first node (BSC).

13. The apparatus of claim 9, wherein the means for sending the list of software file identifiers to the second node (BTS) comprises:
means for selecting, from the list of software file identifiers (931-1,...931-k), a first software file identifier (931-k) for use as a current software file identifier;
means for sending the current software file identifier (931-k) from the first node (BSC) to the second node (BTS);
means for waiting for the response from the second node (BTS);
means, responsive to receipt of the response from the second node (BTS), for selecting, from the list of software file identifiers (931-1,...931-k), a next software file identifier (931-k-1) for use as the current software file identifier by the means for sending the current software file identifier from the first node (BSC) to the second node (BTS).

14. The apparatus of claim 9, wherein the means for sending the list of software file identifiers to the second node (BTS) comprises:
means for selecting, from the list of software file identifiers, a first software file identifier for use as a current software file identifier;
means for sending the current software file identifier from the first node (BSC) to the second node (BTS);
waiting means, coupled to the examining and retrieving means and to the means for sending the retrieved software files (921-1,...921-k) from the first node (BSC) to the second node (BTS), for waiting for those ones of the plurality of software files (921-1,...921-k) that correspond to the software file identifiers (931-1,...931-k) that were indicated as wanted by the second node (BTS) to be retrieved and sent from the first node (BSC) to the second node (BTS), and for generating an output when waiting has completed;
means, responsive to the output of the waiting means, for selecting, from the list of software file identifiers (931-1,...931-k), a next software file identifier (931-k-1) for use as the current software file identifier by the means for sending the current software file identifier from the first node (BSC) to the second node (BTS).

15. The apparatus as claimed in claim 9, further **characterized by**:
means for sending, for a second time, the list of software file identifiers (931-1,...931-k) from the first node (BSC) to the second node (BTS);
the second node (BTS) further comprises:
means for beginning execution of the software files (921-1,...921-k) received from the first node (BSC);
means for using the executing software files (921-1,...921-k) that were received from the first node (BSC) to examine each of the software file identifiers (931-1,...931-k), and
forming a second response that comprises, for each of the software file identifiers, a second indication of whether the corresponding one of the plurality of software files (921-1,...921-k) is alternatively wanted, or not wanted; and
means for sending the second response from the second node (BTS) to the first node (BSC),
wherein the first node (BSC) still further comprises:
means for examining the second response and retrieving those ones of the plurality of software files (921-1,...921-k) that correspond to the software file identifiers (931-1,...931-k) that were indicated in the second response as being wanted by the second node (BTS); and
means for sending, from the first node (BSC) to the second node (BTS), the software files (921-1,...921-k) that were retrieved as a result of examining, in the first node (BSC), the second response.

16. The apparatus of claim 15, wherein each of the first and second indications that the corresponding one of the plurality of software files (921-1,...921-k) is not wanted is alternatively an indication that the corresponding one of the plurality of software files (921-1,...921-k) is already loaded in the second node (BTS), or an indication that the corresponding one of the plurality of software files (921-1,...921-k) is forbidden to be loaded in the second node (BTS).

## Patentansprüche

1. Ein Verfahren in einem vernetzten System, umfassend einen ersten Knoten (BSC), der mit einem zweiten Knoten (BTS) verbunden ist, um eine oder mehrere erwünschte Softwaredateien (921-1,...921-k) zum zweiten Knoten (BTS) zu liefern, wobei die Softwaredateiidentifizierer (931-1,...931-k) jeweils eine entsprechende einer Vielzahl von Softwaredateien (921-1,...921-k) identifizieren,
**gekennzeichnet durch** die Schritte:
im ersten Knoten (BSC), Abrufen eines Menüs (930), das eine Liste der Softwaredateiidentifizierer (931-1,...931-k) umfasst, und Senden der Liste von Softwaredateiidentifizierern (931-1,...931-k) vom ersten Knoten (BSC) zum zweiten Knoten (BTS);
im zweiten Knoten (BTS), Untersuchen eines jeden der Softwaredateiidentifizierer (931-1,...931-k), und Bilden einer Antwort, die für jeden der Softwaredateiidentifizierer (931-1,...931-k) eine Anzeige umfasst, ob die entsprechende Vielzahl von Softwaredateien (921-1,...921-k) alternativ gewünscht oder nicht gewünscht ist;
Senden der Antwort von dem zweiten Knoten (BTS) zum ersten Knoten (BSC);
im ersten Knoten (BSC), Untersuchen der Antwort und Abrufen solcher der Vielzahl von Softwaredateien (921-1,...921-k), die den Softwaredateiidentifizierern (931-1,...931-k) entsprechen, die als **durch** den zweiten Knoten (BTS) gewünscht bezeichnet waren; und
Senden der abgerufenen Softwaredateien (921-1,...921-k) vom ersten Knoten (BSC) zum zweiten Knoten (BTS).

2. Das Verfahren nach Anspruch 1, wobei die Anzeige, dass die entsprechende eine der Vielzahl von Softwaredateien (921-1,...921-k) nicht erwünscht ist, alternativ eine Anzeige ist, dass die entsprechende eine der Vielzahl von Softwaredateien (921-1,...921-k) bereits im zweiten Knoten (BTS) geladen ist, oder eine Anzeige, dass ein Laden der entsprechenden der Vielzahl von Softwaredateien (921-1,...921-k) in den zweiten Knoten (BTS) verboten ist.

3. Das Verfahren nach Anspruch 1, wobei:
das vernetzte System ein zellulares Telefonsystem ist, der erste Knoten (BCS) ein Basisstationscontroller (201) ist, und der zweite Knoten (BTS) eine Basistransceiverstation (203) ist;
der Basisstationscontroller eine Speichereinrichtung (221) umfasst, um die Vielzahl von Softwaredateien (921-1,...921-k) zu speichern; und
der Schritt eines Abrufens im ersten Knoten (BSC) solcher der Vielzahl von Softwaredateien (921-1,...921-k), die den Softwaredateiidentifiziern (931-1,...931-k) entsprechen, die als durch den zweiten Knoten (BTS) erwünscht bezeichnet waren, den Schritt umfasst, von der lokalen Speichereinrichtung solche der Vielzahl von Softwaredateien (921-1,...921-k) abzurufen, die den Softwaredateiidentifizieren (931-1,...931-k) entsprechen, die als durch den zweiten Knoten (BTS) erwünscht bezeichnet waren.

4. Das Verfahren nach Anspruch 1, wobei:
das vernetzte System ein zellulares Telefonsystem ist, der erste Knoten (BSC) ein Basisstationscontroller (201) ist, und der zweite Knoten (BTS) eine Basistransceiverstation (203); und
der Schritt eines Abrufens im ersten Knoten (BSC) solcher der Vielzahl von Softwaredateien (921-1,...'921-k), die zu den Softwaredateiidentifizieren (931-1,...931-k) gehören, die als durch den zweiten Knoten (BTS) gewünscht bezeichnet waren, die Schritte umfasst:
Senden einer Anfrage vom ersten Knoten (BCS) zu einem Betriebsunterstützungssystem für solche der Vielzahl von Softwaredateien (921-1,...921-k), die den Softwaredateiidentifizieren entsprechen, die als durch den zweiten Knoten (BTS) gewünscht bezeichnet waren;
im Betriebsunterstützungssystem, Abrufen der angeforderten Softwaredateien (921-1,...921-k); und
Senden der abgerufenen Softwaredateien (921-1,...921-k) von dem Betriebsunterstützungssystem zum ersten Knoten (BSC).

5. Das Verfahren nach Anspruch 1, wobei der Schritt des Sendens der Liste von Softwaredateiidentifizierern (931-1,...931-k) zum zweiten Knoten (BTS) die Schritte umfasst:
a) Auswählen, aus der Liste von
Softwaredateiidentifizierern (931-1,...931-k), eines ersten Softwaredateiidentifzierers (931-k) zur Verwendung als ein momentaner Softwaredateiidentifizierer;
b) Senden des momentanen Softwaredateiidentifizierers (931-k) vom ersten Knoten (BCS) zum zweiten Knoten (BTS);
c) Warten auf die Antwort von dem zweiten Knoten (BTS);
d) nach einem Empfang der Antwort von dem zweiten Knoten (BTS), Auswählen, aus der Liste von Softwaredateiidentifizierern, eines nächsten Softwaredateiidentifizierers zur Verwendung als momentanen Softwaredateiidentifizierer; und
e) Wiederholen der Schritte b) bis d), bis ein jeder der Softwaredateiidentifizierer (931-1,...031-k) in der Liste von Softwaredateiidentifizierern vom ersten Knoten (BSC) zum zweiten Knoten (BTS) gesendet wurde.

6. Das Verfahren nach Anspruch 5, wobei der Schritt d) die Schritte umfasst:
nach einem Empfang der Antwort von dem zweiten Knoten (BTS), Warten darauf, dass die Antwort im ersten Knoten (BSC) untersucht wird;
Warten auf solche der Vielzahl von Softwaredateien (921-1,...921-k) die den Softwaredateiidentifizierern (931-1,...931-k) entsprechen, die als durch den zweiten Knoten (BTS) als gewünscht bezeichnet waren, abzurufen in dem ersten Knoten (BSC);
Warten darauf, dass die abgerufenen Softwaredateien (921-1,...921-k) von dem ersten Knoten (BSC) zum zweiten Knoten (BTS) gesendet werden; und dann
Auswählen aus der Liste von Softwaredateiidentifizierern (931-1,...931-k) eines nächsten
Softwaredateiidentifzierers (931-1,...931-k) zur Verwendung als momentanen Softwaredateiidentifizierer.

7. Ein Verfahren nach Anspruch 1, weiter **gekennzeichnet durch**:
im zweiten Knoten (BTS), Beginnen einer Ausführung der vom ersten Knoten (BSC) empfangenen Softwaredateien (921-1,...921-k);
Senden, ein zweites Mal, der Liste von Softwaredateiidentifizierern (931-1,...931-k) vom ersten Knoten (BSC) zum zweiten Knoten (BTS);
im zweiten Knoten (BTS), Verwenden der ausgeführten Softwaredateien (9921-1,...921-k), die vom ersten Knoten (BSC) empfangen wurden, um einen jeden der Softwaredateiidentifizierern (931-1,...931-k) zu untersuchen, und Bilden einer zweiten Antwort, die für jeden der Softwaredateiidentifizierer eine zweite Anzeige umfasst, ob die entsprechende der Vielzahl von Softwaredateien (921-1,...921-k) alternativ gewünscht oder nicht gewünscht ist;
Senden der zweiten Antwort vom zweiten Knoten (BTS) zum ersten Knoten (BSC);
im ersten Knoten (BSC), Untersuchen der zweiten Antwort und Abrufen solcher der Vielzahl von Softwaredateien (921-1,...921-k), die den Softwaredateiidentifizierern (931-1,...931-k) entsprechen, die in der zweiten Antwort als **durch** den zweiten Knoten (BTS) gewünscht bezeichnet waren; und
Senden, vom ersten Knoten (BSC) zum zweiten Knoten (BTS), die Softwaredateien (921-1,...921-k), die als ein Ergebnis der Überprüfung der zweiten Antwort im ersten Knoten (BSC) abgerufen wurden.

8. Das Verfahren nach Anspruch 7, wobei die erste und zweite Anzeige, dass die entsprechende der Vielzahl von Softwaredateien (921-1,...921-k) nicht gewünscht ist, alternativ eine Anzeige ist, dass die entsprechende eine der Vielzahl von Softwaredateien (921-1,...921-k) bereits im zweiten Knoten (BTS) geladen ist, oder eine Anzeige, dass ein Laden der entsprechenden einen der Vielzahl von Softwaredateien (921-1,...921-k) in den zweiten Knoten (BTS) verboten ist.

9. Eine Vorrichtung in einem vernetzten System einschließlich eines ersten Knotens (BSC) mit einem ersten Knoten (BSC), der mit einem zweiten Knoten (BTS) gekoppelt ist, zum Liefern einer oder mehrerer erwünschter Softwaredateien (921-1,...921-k) zum zweiten Knoten (BTS), wobei die Softwaredateiidentifizierer (931-1,...931-k) jeweils eine entsprechende einer Vielzahl von Softwaredateien (921-1,...921-k) identifizieren,
**gekennzeichnet durch**:
im ersten Knoten (BSC) :
eine Einrichtung zum Abrufen eines Menüs, das eine Liste der Softwaredateiidentifizierer (931-1,...931-k) umfasst, und
eine Einrichtung zum Senden der Liste von Softwaredateiidentifizierern (931-1,...931-k) vom ersten Knoten (BSC) zum zweiten Knoten (BTS);
im zweiten Knoten (BTS):
eine Einrichtung zum Überprüfen eines jeden der Softwaredateiidentifizierer (931-1,...931-k) und Bilden einer Antwort, die für einen jeden der Softwaredateiidentifizierer eine Anzeige umfasst, ob die entsprechende eine der Vielzahl von Softwaredateien (921-1,...921-k) alternativ gewünscht oder nicht gewünscht ist; und
eine Einrichtung zum Senden der Antwort von dem zweiten Knoten (BTS) zum ersten Knoten (BSC),
wobei der erste Knoten (BSC) weiter umfasst:
eine Einrichtung zum Überprüfen der Antwort und Abrufen solcher der Vielzahl von Softwaredateien (921-1,...921-k), die den Softwaredateiidentifizierern (931-1,...931-k) entsprechen, die als **durch** den zweiten Knoten (BTS) gewünscht bezeichnet waren; und
eine Einrichtung zum Senden der abgerufenen Softwaredateien (921-1,...921-k) vom ersten Knoten (BS) zum zweiten Knoten (BTS).

10. Die Vorrichtung nach Anspruch 9, wobei die Anzeige, dass die entsprechende eine der Vielzahl von Softwaredateien (921-1,...921-k) nicht gewünscht ist, alternativ eine Anzeige ist, dass die entsprechende eine der Vielzahl von Softwaredateien (921-1,...921-k) bereits im zweiten Knoten (BTS) geladen ist, oder einer Anzeige, dass ein Laden der entsprechenden der Vielzahl von Softwaredateien (921-1,...921-k) in den zweiten Knoten (BTS) verboten ist.

11. Die Vorrichtung nach Anspruch 9, wobei:
das vernetzte System ein zellulares Telefonsystem ist, der erste Knoten (BSC) ein Basisstationscontroller (201) ist, und der zweite Knoten (BTS) eine Basistranceiverstation (203);
der Basisstationscontroller (201) eine Speichereinrichtung umfasst, zum Speichern der Vielzahl von Softwaredateien (921-1,...921-k); und
die Einrichtung, im ersten Knoten (BSC), zum Abrufen solcher der Vielzahl von Softwaredateien (921-1,...921-k), die den Softwaredateiidentifizierern (931-1,...931-k) entsprechen, die als durch den zweiten Knoten (BTS) gewünscht bezeichnet waren, eine Einrichtung zum Abrufen umfasst, von der lokalen Speichereinrichtung, solcher der Vielzahl von Softwaredateien (921-1,...921-k), die den Softwaredateiidentifizierern (931-1,...931-k) entsprechen, die als durch den zweiten Knoten (BTS) gewünscht bezeichnet waren.

12. Die Vorrichtung nach Anspruch 9, wobei:
das vernetzte System ein zellulares Telefonsystem ist, das weiter ein Betriebsunterstützungssystem (233) umfasst, das mit dem ersten Knoten (BSC) gekoppelt ist;
der erste Knoten (BSC) ein Basisstationscontroller (201) ist;
der zweite Knoten (BTS) eine Basistransceiverstation (203) ist;
die Einrichtung, im ersten Knoten (BSC), zum Abrufen solcher der Vielzahl von Softwaredateien (921-1,...9121-k), die den Softwaredateiidentifizierern (931-1,...931-k) entsprechen, die als durch den zweiten Knoten (BTS) gewünscht bezeichnet waren, eine Einrichtung zum Senden umfasst, vom ersten Knoten (BSC) zum Betriebsunterstützungssystem (OSS), einer Anfrage für solche der Vielzahl von Softwaredateien (921-1,...921-k), die den Softwaredateiidentifizierern (931-1,...931-k) entsprechen, die als durch den zweiten Knoten (BTS) gewünscht bezeichnet waren; und
wobei das Betriebsunterstützungssystem (OSS) umfasst:
eine Einrichtung zum Abrufen der angeforderten Softwaredateien (921-1,...921-k); und
eine Einrichtung zum Senden der abgerufenen Softwaredateien (921-1,...921-k) vom Betriebsunterstützungssystem zum ersten Knoten (BSC).

13. Die Vorrichtung nach Anspruch 9, wobei die Einrichtung zum Senden der Liste von Softwaredateiidentifizierern zum zweiten Knoten (BTS) umfasst:
eine Einrichtung zum Auswählen, aus der Liste von Softwaredateiidentifizierern (931-1,...931-k), eines ersten Softwaredateiidentifizierers (931-k) zur Verwendung als momentanen Softwaredateiidentifizierer;
eine Einrichtung zum Senden des momentanen Softwaredateiidentifizierers (931-k) vom ersten Knoten (BSC) zum zweiten Knoten (BTS);
eine Einrichtung zum Warten auf die Antwort von dem zweiten Knoten (BTS);
eine Einrichtung, auf den Empfang der Antwort von dem zweiten Knoten (BTS) ansprechend, zum Auswählen aus der Liste von Softwaredateiidentifizierern (931-1,...931-k), eines nächsten Softwaredateiidentifizierers (931-k-1) zur Verwendung als momentanen Softwaredateiidentifizierer durch die Einrichtung zum Senden des momentanen Softwareidentifzierers vom ersten Knoten (BSC) zum zweiten Knoten (BTS).

14. Die Vorrichtung nach Anspruch 9, wobei die Einrichtung zum Senden der Liste von Softwaredateiidentifizierern zum zweiten Knoten (BTS) umfasst:
eine Einrichtung zum Auswählen, aus der Liste von Softwaredateiidentifizierern, eines ersten Softwaredateiidentifizierers zur Verwendung als momentanen Softwaredateiidentifizierer;
eine Einrichtung zum Senden des momentanen Softwaredateiidentifizierers vom ersten Knoten (BSC) zum zweiten Knoten (BTS);
eine Warteeinrichtung, mit der Überprüfungs- und Abrufseinrichtung und der Einrichtung zum Senden der abgerufenen Softwaredateien (921-1,...921-k) von dem ersten Knoten (BSC) zum zweiten Knoten (BTS) verbunden, um auf solche der Vielzahl von Softwaredateien (921-1,...921-k) zu warten, die den Softwaredateiidentifizierern (931-1,...931-k) entsprechen, die als durch den zweiten Knoten (BTS) gewünscht bezeichnet waren, abzurufen und zu senden von dem ersten Knoten (BSC) zum zweiten Knoten (BTS), und zum Erzeugen einer Ausgabe, wenn das Warten beendet ist;
eine Einrichtung, auf die Ausgabe der Warteeinrichtung ansprechend, um aus der Liste von Softwaredateiidentifizierern (931-1,...931-k) einen nächsten Softwaredateiidentifizierer (931-k-1) auszuwählen, zur Verwendung als momentanen Softwaredateiidentifizierer durch die Einrichtung zum Senden des momentanen Softwaredateiidentifizierers von dem ersten Knoten (BSC) zum zweiten Knoten (BTS).

15. Die Vorrichtung nach Anspruch 9, weiter **gekennzeichnet durch**:
eine Einrichtung zum Senden, ein zweites Mal, der Liste von Softwaredateiidentifizierern (931-1,...931-k) vom ersten Knoten (BSC) zum zweiten Knoten (BTS);
wobei der zweite Knoten weiter umfasst:
eine Einrichtung zum Beginnen einer Ausführung der Softwaredateien (921-1,...921-k), die vom ersten Knoten (BSC) empfangen sind;
eine Einrichtung zum Verwenden der ausgeführten Softwaredateien (921-1,...921-k), die vom ersten Knoten (BSC) empfangen wurden, um einen jeden der Softwaredateiidentifizierer (931-1,...931-k) zu untersuchen, und zum Bilden einer zweiten Antwort, die für einen jeden der Softwaredateiidentifizierer eine zweite Anzeige umfasst, ob die entsprechende eine der Vielzahl von Softwaredateien (921-1,...921-k) alternativ gewünscht oder nicht gewünscht ist; und
eine Einrichtung zum Senden der zweiten Antwort von dem zweiten Knoten (BTS zu dem ersten Knoten (BSC),
wobei der erste Knoten (BSC) weiter umfasst:
eine Einrichtung zum Untersuchen der zweiten Antwort und Abrufen solcher der Vielzahl von Softwaredateien (921-1,...921-k), die den Softwaredateiidentifizierern (931-1,...931-k) entsprechen, die in der zweiten Antwort als **durch** den zweiten Knoten (BTS) erwünscht bezeichnet waren; und
eine Einrichtung zum Senden, vom ersten Knoten (BSC) zum zweiten Knoten (BTS), der Softwaredateien (921-1,...921-k), die als ein Ergebnis der Überprüfung der zweiten Antwort im ersten Knoten (BSC) abgerufen wurden.

16. Die Vorrichtung nach Anspruch 15, wobei die erste und zweite Anzeige, dass die entsprechende eine der Vielzahl von Softwaredateien (921-1,...921-k) nicht erwünscht ist, alternativ eine Anzeige ist, dass die entsprechende eine der Vielzahl von Softwaredateien (921-1,...921-k) bereits im zweiten Knoten (BTS) geladen ist, oder eine Anzeige, dass ein Laden der entsprechenden der Vielzahl von Softwaredateien (921-1,...921-k) in den zweiten Knoten (BTS) verboten ist.

## Revendications

1. Procédé sur un système en réseau comprenant un premier noeud (BSC) couplé à un second noeud (BTS) pour fournir un ou plusieurs fichiers logiciels souhaités (921-1 à 921-k) au second noeud (BTS), dans lequel des identificateurs de fichiers logiciels (931-1 à 931-k) identifient chacun un fichier logiciel correspondant dans une pluralité de fichiers logiciels (921-1 à 921-k),
**caractérisé par** les étapes consistant à :
sur le premier noeud (BSC), obtenir un menu (930) comprenant une liste desdits identificateurs de fichiers logiciels (931-1 à 931-k) et envoyer la liste des identificateurs de fichiers logiciels (931-1 à 931-k) du premier noeud (BSC) au second noeud (BTS) ;
sur le second noeud (BTS), examiner chacun des identificateurs de fichiers logiciels (931-1 à 931-k) et former une réponse qui comprend, pour chacun des identificateurs de fichiers logiciels (931-1 à 931-k), une indication du fait que le fichier logiciel correspondant, de la pluralité de fichiers logiciels (921-1 à 921-k), est soit souhaité, soit non souhaité ;
envoyer la réponse du second noeud (BTS) au premier noeud (BSC) ;
sur le premier noeud (BSC), examiner la réponse et obtenir ceux des fichiers logiciels, de la pluralité de fichiers logiciels (921-1 à 921-k) qui correspondent aux identificateurs de fichiers logiciels (931-1 à 931-k) qui ont été indiqués comme souhaités par le second noeud (BTS) ; et
envoyer les fichiers logiciels obtenus (921-1 à 921-k) du premier noeud (BSC) au second noeud (BTS).

2. Procédé selon la revendication 1, dans lequel l'indication du fait que le fichier logiciel correspondant, de la pluralité de fichiers logiciels (921-1 à 921-k), n'est pas souhaité est soit une indication que le fichier logiciel correspondant, de la pluralité de fichiers logiciels (921-1 à 921-k), est déjà chargé sur le second noeud (BTS) ou une indication que le fichier logiciel correspondant, de la pluralité de fichiers logiciels (921-1 à 921-k), est interdit de chargement sur le second noeud. (BTS).

3. Procédé selon la revendication 1, dans lequel :
le système en réseau est un système téléphonique cellulaire, le premier noeud (BSC) est un contrôleur de station de base (201) et le second noeud (BTS) est une station émettrice réceptrice de base (203) ;
le contrôleur de station de base comprend un moyen de stockage (221) afin de stocker la pluralité de fichiers logiciels (921-1 à 921-k) ; et
l'étape consistant à, sur le premier noeud (BSC), obtenir ceux des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS) comprend l'étape consistant à obtenir, du moyen de stockage local, ceux des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS).

4. Procédé selon la revendication 1, dans lequel :
le système en réseau est un système téléphonique cellulaire, le premier noeud (BSC) est un contrôleur de station de base (201) et le second noeud (BTS) est une station émettrice réceptrice de base (203) ; et
l'étape consistant à, sur le premier noeud (BSC), obtenir ceux des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS) comprend les étapes consistant à :
envoyer, du premier noeud (BSC) à un système de soutien opérationnel, une demande des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS) ;
sur le système de soutien opérationnel, obtenir les fichiers logiciels demandés (921-1 à 921-k) ; et
envoyer les fichiers logiciels obtenus (921-1 à 921-k) du système de soutien opérationnel au premier noeud (BSC).

5. Procédé selon la revendication 1, dans lequel l'étape consistant à envoyer la liste des identificateurs de fichiers logiciels (931-1 à 931-k) au second noeud (BTS) comprend les étapes consistant à :
a) sélectionner, dans la liste des identificateurs de fichiers logiciels (931-1 à 931-k), un premier identificateur de fichier logiciel (931-k) à utiliser comme identificateur de fichier logiciel courant ;
b) envoyer l'identificateur de fichier logiciel courant (931-k) du premier noeud (BSC) au second noeud (BTS) ;
c) attendre la réponse du second noeud (BTS) ;
d) après réception de la réponse du second noeud (BTS), sélectionner, dans la liste des identificateurs de fichiers logiciels, un identificateur de fichier logiciel suivant à utiliser comme identificateur de fichier logiciel courant ; et
e) répéter les étapes b) à d) jusqu'à ce que tous les identificateurs de fichiers logiciels (931-1 à 931-k) de la liste des identificateurs de fichiers logiciels aient été envoyés du premier noeud (BSC) au second noeud (BTS).

6. Procédé selon la revendication 5, dans lequel l'étape d) comprend les étapes consistant à :
après réception de la réponse du second noeud (BTS), attendre que la réponse soit examinée sur le premier noeud (BSC) ;
attendre que ceux des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS), soient obtenus sur le premier noeud (BSC) ;
attendre que les fichiers logiciels obtenus (921-1 à 921-k) soient envoyés du premier noeud (BSC) au second noeud (BTS) ; puis
sélectionner, dans la liste des identificateurs de fichiers logiciels (931-1 à 931-k), un identificateur de fichier logiciel suivant (931-k - 1) à utiliser comme identificateur de fichier logiciel courant.

7. Procédé selon la revendication 1, **caractérisé en outre par** le fait de :
sur le second noeud (BTS), commencer l'exécution des fichiers logiciels (921-1 à 921-k) reçus du premier noeud (BSC) ;
envoyer, pour une seconde fois, la liste des identificateurs de fichiers logiciels (931-1 à 931-k) du premier noeud (BSC) au second noeud (BTS) ;
sur le second noeud (BTS), utiliser les fichiers logiciels (921-1 à 921-k) qui s'exécutent et qui avaient été reçus du premier noeud (BSC) pour examiner chacun des identificateurs de fichiers logiciels (931-1 à 931-k) et former une seconde réponse qui comprend, pour chacun des identificateurs de fichiers logiciels, une seconde indication du fait que le fichier logiciel correspondant, de la pluralité de fichiers logiciels (921-1 à 921-k), est soit souhaité, soit non souhaité ;
envoyer la seconde réponse du second noeud (BTS) au premier noeud (BSC) ;
sur le premier noeud (BSC), examiner la seconde réponse et obtenir ceux des fichiers logiciels, de la pluralité de fichiers logiciels (921-1 à 921-k), qui correspondent aux identificateurs de fichiers logiciels (931-1 à 931-k) qui ont été indiqués dans la seconde réponse comme souhaités par le second noeud (BTS) ; et
envoyer, du premier noeud (BSC) au second noeud (BTS), les fichiers logiciels (921-1 à 921-k) qui ont été obtenus à la suite de l'examen, sur le premier noeud (BSC), de la seconde réponse.

8. Procédé selon la revendication 7, dans lequel chacune des première et seconde indications que le fichier logiciel correspondant, de la pluralité de fichiers logiciels (921-1 à 921-k), n'est pas souhaité est alternativement une indication que le fichier logiciel correspondant, de la pluralité de fichiers logiciels (921-1 à 921-k), est déjà chargé sur le second noeud (BTS) ou une indication que le fichier logiciel correspondant, de la pluralité de fichiers logiciels (921-1 à 921-k), est interdit de chargement sur le second noeud (BTS).

9. Appareil sur un système en réseau, comprenant un premier noeud (BSC) couplé à un second noeud (BTS) pour fournir un ou plusieurs fichiers logiciels souhaités (921-1 à 921-k) au second noeud (BTS), dans lequel des identificateurs de fichiers logiciels (931-1 à 931-k) identifient chacun un fichier logiciel correspondant sur une pluralité de fichiers logiciels (921-1 à 921-k),
**caractérisé par** :
sur le premier noeud (BSC) :
un moyen d'obtenir un menu comprenant une liste desdits identificateurs de fichiers logiciels (931-1 à 931-k), et
un moyen d'envoyer la liste des identificateurs de fichiers logiciels (931-1 à 931-k) du premier noeud (BSC) au second noeud (BTS) ;
sur le second noeud (BTS) :
un moyen d'examiner chacun des identificateurs de fichiers logiciels (931-1 à 931-k) et de former une réponse qui comprend, pour chacun des identificateurs de fichiers logiciels (931-1 à 931-k), une indication du fait que le fichier logiciel correspondant, de la pluralité de fichiers logiciels (921-1 à 921-k), est soit souhaité, soit non souhaité ; et
un moyen d'envoyer la réponse du second noeud (BTS) au premier noeud (BSC) ;
dans lequel le premier noeud (BSC) comprend également :
un moyen d'examiner la réponse et d'obtenir ceux des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS) ; et
un moyen d'envoyer les fichiers logiciels obtenus (921-1 à 921-k) du premier noeud (BSC) au second noeud (BTS).

10. Appareil selon la revendication 9, dans lequel l'indication du fait que le fichier logiciel correspondant, de la pluralité de fichiers logiciels (921-1 à 921-k), n'est pas souhaité est alternativement une indication que le fichier logiciel correspondant, de la pluralité de fichiers logiciels (921-1 à 921-k), est déjà chargé sur le second noeud (BTS) ou une indication que le fichier logiciel correspondant, de la pluralité de fichiers logiciels (921-1 à 921-k), est interdit de chargement sur le second noeud (BTS).

11. Appareil selon la revendication 9, dans lequel :
le système en réseau est un système téléphonique cellulaire, le premier noeud (BSC) est un contrôleur de station de base (201) et le second noeud (BTS) est une station émettrice réceptrice de base (203) ;
le contrôleur de station de base (201) comprend un moyen de stockage afin de stocker la pluralité de fichiers logiciels (921-1 à 921-k) ; et
le moyen, sur le premier noeud (BSC), d'obtenir ceux des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS) comprend un moyen d'obtenir, du moyen de stockage local, ceux des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS).

12. Appareil selon la revendication 9, dans lequel :
le système en réseau est un système téléphonique cellulaire qui comprend en outre un système de soutien opérationnel (233) couplé au premier noeud (BSC) ;
le premier noeud (BSC) est un contrôleur de station de base (201) ;
le second noeud (BTS) est une station émettrice réceptrice de base (203) ;
le moyen, sur le premier noeud (BSC), d'obtenir ceux des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS) comprend un moyen d'envoyer, du premier noeud (BSC) à un système de soutien opérationnel (OSS), une demande de ceux des fichiers logiciels, de la pluralité de fichiers logiciels (921-1 à 921-k), qui correspondent aux identificateurs de fichiers logiciels (931-1 à 931-k) qui ont été indiqués comme souhaités par le second noeud (BTS) ; et
le système de soutien opérationnel (OSS) comprend :
un moyen d'obtenir les fichiers logiciels demandés (921-1 à 921-k) ; et
un moyen d'envoyer les fichiers logiciels obtenus (921-1 à 921-k) du système de soutien opérationnel au premier noeud (BSC).

13. Appareil selon la revendication 9, dans lequel le moyen d'envoyer la liste des identificateurs de fichiers logiciels au second noeud (BTS) comprend :
un moyen de sélectionner, dans la liste des identificateurs de fichiers logiciels (931-1 à 931-k), un premier identificateur de fichier logiciel (931-k) à utiliser comme identificateur de fichier logiciel courant ;
un moyen d'envoyer l'identificateur de fichier logiciel courant (931-k) du premier noeud (BSC) au second noeud (BTS) ;
un moyen d'attendre la réponse du second noeud (BTS) ;
un moyen, après réception de la réponse du second noeud (BTS), de sélectionner, dans la liste des identificateurs de fichiers logiciels (931-1 à 931-k), un identificateur de fichier logiciel suivant à utiliser comme identificateur de fichier logiciel courant par le moyen d'envoyer l'identificateur de fichier logiciel courant du premier noeud (BSC) au second noeud (BTS).

14. Appareil selon la revendication 9, dans lequel le moyen d'envoyer la liste des identificateurs de fichiers logiciels au second noeud (BTS) comprend :
un moyen de sélectionner, dans la liste des identificateurs de fichiers logiciels, un premier identificateur de fichier logiciel (931-k) à utiliser comme identificateur de fichier logiciel courant ;
un moyen d'envoyer l'identificateur de fichier logiciel courant (931-k) du premier noeud (BSC) au second noeud (BTS) ;
un moyen d'attente, couplé au moyen d'examiner et d'obtenir et au moyen d'envoyer les fichiers logiciels obtenus (921-1 à 921-k) du premier noeud (BSC) au second noeud (BTS), pour attendre que ceux des fichiers logiciels, de la pluralité de fichiers logiciels (921-1 à 921-k), qui correspondent aux identificateurs de fichiers logiciels (931-1 à 931-k) qui avaient été indiqués comme souhaités par le second noeud (BTS), soient obtenus et envoyés du premier noeud (BSC) au second noeud (BTS) et pour générer un signal de sortie lorsque l'attente est achevée ;
un moyen, en réponse au signal de sortie du moyen d'attente, de sélectionner, dans la liste des identificateurs de fichiers logiciels (931-1 à 931-k), un identificateur de fichier logiciel suivant (931-k - 1) à utiliser comme identificateur de fichier logiciel courant par le moyen d'envoyer l'identificateur de fichier logiciel courant du premier noeud (BSC) au second noeud (BTS).

15. Appareil selon la revendication 9, **caractérisé en outre par** :
un moyen d'envoyer, pour une seconde fois, la liste des identificateurs de fichiers logiciels (931-1 à 931-k) du premier noeud (BSC) au second noeud (BTS) ;
le second noeud (BTS) comprenant en outre :
un moyen de commencer l'exécution des fichiers logiciels (921-1 à 921-k) reçus du premier noeud (BSC) ;
un moyen d'utiliser les fichiers logiciels (921-1 à 921-k) qui s'exécutent et qui avaient été reçus du premier noeud (BSC) pour examiner chacun des identificateurs de fichiers logiciels (931-1 à 931-k) et de former une seconde réponse qui comprend, pour chacun des identificateurs de fichiers logiciels, une seconde indication du fait que le fichier logiciel correspondant, de la pluralité de fichiers logiciels (921-1 à 921-k), est soit souhaité, soit non souhaité ; et
un moyen d'envoyer la seconde réponse du second noeud (BTS) au premier noeud (BSC) ;
dans lequel le premier noeud (BSC) comprend encore :
un moyen d'examiner la seconde réponse et d'obtenir ceux des fichiers logiciels, de la pluralité de fichiers logiciels (921-1 à 921-k), qui correspondent aux identificateurs de fichiers logiciels (931-1 à 931-k) qui ont été indiqués dans la seconde réponse comme souhaités par le second noeud (BTS) ; et
un moyen d'envoyer, du premier noeud (BSC) au second noeud (BTS), les fichiers logiciels (921-1 à 921-k) qui ont été obtenus à la suite de l'examen, sur le premier noeud (BSC), de la seconde réponse.

16. Appareil selon la revendication 15, dans lequel chacune des première et seconde indications que le fichier logiciel correspondant, de la pluralité de fichiers logiciels (921-1 à 921-k), n'est pas souhaité est alternativement une indication que le fichier logiciel correspondant, de la pluralité de fichiers logiciels (921-1 à 921-k), est déjà chargé sur le second noeud (BTS) ou une indication que le fichier logiciel correspondant, de la pluralité de fichiers logiciels (921-1 à 921-k), est interdit de chargement sur le second noeud (BTS).
